# DEMANDE DE BREVET EUROPEEN

(11) **EP 1 282 288 A1**
(43) Date de publication de la demande: **05.02.2003**
(21) Numéro de dépôt: 02291850.2
(22) Date de dépôt: 22.07.2002
(51) Int. Cl.: H04L 29/06

(54) **Procédé et dispositif d'authentification**

(30) Priorité: 20.07.2001 FR 0110042; 13.12.2001 FR 0116173
(71) Demandeur: Magic Axess, 75011 Paris (FR)
(72) Inventeur: Kremer, Gilles, 92170 Vanves (FR); Lafon, Martin, 91400 Orsay (FR)
(74) Mandataire: Benech, Frédéric

(57) **Abrégé**

Le procédé de certification comporte :
- une opération d'identification d'un utilisateur (155) au cours de laquelle ledit utilisateur transmet à un serveur, par l'intermédiaire d'un premier terminal (100) sur un premier réseau de communication (110), un certificat représentant, de manière chiffrée, une adresse unique d'un deuxième terminal (140) dudit utilisateur sur un deuxième réseau de communication (130),
- une opération de déchiffrement (157) de ladite adresse unique par ledit serveur, et
- une opération de communication (161) entre ledit serveur et le deuxième terminal.

## Description

La présente invention concerne un procédé et un dispositif de certification. En particulier, la présente invention concerne la transmission de données en ligne, par exemple sur le réseau Internet.

Du fait de sa nature ouverte, Internet a augmenté les besoins de sécurité de transmission de données. En effet, l'architecture même de l'Internet le rend particulièrement vulnérable : le protocole IP, totalement décentralisé, fait circuler les datagrammes, ou "paquets" sans qu'ils soient protégés. Les adresses IP elles-mêmes, gérées par les DNS (Domain Name Servers pour "serveurs de noms de domaines"), ne sont pas à l'abri d'actions de malveillance. Les systèmes d'exploitation ont des failles de sécurité. D'où une liste impressionnante de menaces :
- écoute de paquets ou "sniffing";
- substitution de paquets ou "spoofing";
- piratage de DNS;
- déni de service;
- intrusions; et
- dissémination de programmes malveillants, virus et chevaux de Troie.

La cryptologie n'a pas réponse à toutes ces questions. En cryptologie, une clé est insérée au moment du chiffrement des données afin d'assurer la confidentialité de celles-ci. Les différentes normes de sécurité disponibles, pour le courrier électronique, pour les sessions de communication du web (SSL ou "Secure Socket Layer" pour "couche de sécurité"), pour le protocole IP lui-même (IPsec), mettent en oeuvre tout l'arsenal des méthodes modernes : authentification et signature, échange de clé conventionnelle, chiffrement symétrique. Des centaines de millions de clés RSA ont ainsi été produites.

Il se pose alors de nouveaux problèmes : comment gérer ces clés ? Comme le note Jacques Stem, Directeur du Département Informatique de l'Ecole Normale Supérieure "il est illusoire d'utiliser un chiffrement RSA en laissant traîner ses clés secrètes sur un disque dur mal protégé contre les intrusions" (Dans un article publié dans Le Monde daté du 12 septembre 2000). En outre se pose la question de lier une clé publique RSA à son propriétaire légitime.

La présente invention entend remédier à tout ou partie de ces inconvénients. A cet effet, la présente invention vise, selon un premier aspect, un procédé de certification, caractérisé en ce qu'il comporte :
- une opération d'identification d'un utilisateur au cours de laquelle ledit utilisateur transmet à un serveur, par l'intermédiaire d'un premier terminal sur un premier réseau de communication, un certificat représentant, de manière chiffrée, une adresse unique d'un deuxième terminal dudit utilisateur sur un deuxième réseau de communication,
- une opération de déchiffrement de ladite adresse unique par ledit serveur, et
- une opération de communication entre ledit serveur et le deuxième terminal.

Grâce à ces dispositions, ledit serveur n'a pas besoin de connaître l'adresse unique du deuxième terminal mais seulement la clé de déchiffrement pour obtenir cette adresse unique. L'adresse unique est ainsi protégée puisqu'elle n'est pas conservée dans une base de données accessible par le serveur. Le chiffrement de ladite adresse unique la protège aussi contre une divulgation non désirée par l'utilisateur.

Selon des caractéristiques particulières, le procédé de l'invention tel que succinctement exposé ci-dessus, comporte, en outre :
- une opération de transmission d'une information non prédictible, par ledit serveur, au deuxième terminal,
- une opération de transmission audit serveur par l'intermédiaire du premier terminal de ladite information non prédictible,
- une opération de vérification de ladite information non prédictible par ledit serveur et
- si la vérification est positive, une opération d'autorisation d'accès du premier terminal à une ressource du premier réseau de communication.

Grâce à ces dispositions, ledit utilisateur est authentifié par ledit serveur.

Selon des caractéristiques particulières du procédé de l'invention tel que succinctement exposé ci-dessus, au cours de l'opération d'identification ledit utilisateur transmet au serveur, par l'intermédiaire d'un premier réseau de communication, un certificat représentant, chiffré avec une clé publique, l'adresse unique du deuxième terminal.

Grâce à ces dispositions, seul le serveur peut déchiffrer ladite adresse unique mais il n'est pas nécessaire qu'il la conserve dans une base de données pour l'obtenir. L'adresse unique est ainsi doublement protégée.

Selon un deuxième aspect, la présente invention vise un procédé de certification caractérisé en ce qu'il met en oeuvre une base de données d'utilisateurs comportant, pour chaque utilisateur, un moyen d'obtention d'une adresse unique d'un terminal sur un réseau de communication (par exemple ladite adresse unique ou une clé de déchiffrement) et un pointeur identifiant une autre base de données comportant de l'information de signature électronique.

Selon un troisième aspect, la présente invention vise un procédé de certification caractérisé en ce qu'il met en oeuvre un certificat conforme à une infrastructure à clés asymétriques, tel que l'infrastructure à clés publiques PKI, identifiant un utilisateur, comportant :
- un champ représentatif d'une adresse unique d'un terminal utilisateur dudit utilisateur, et
- un certificat conforme à ladite infrastructure à clés asymétriques ne représentant pas ladite adresse unique.

Grâce à ces dispositions, l'utilisateur peut être identifié par l'utilisation dudit terminal tout en utilisant n'importe quel certificat mis en oeuvre par une autre autorité de certification.

La présente invention vise aussi un procédé et un dispositif d'autorisation d'accès à une ressource accessible en ligne. Elle vise, en particulier, à référencer, dans une base de données, des utilisateurs d'un service d'authentification et, encore plus particulièrement à permettre à des utilisateurs fournissant de l'information ou sélectionnant un destinataire, d'authentifier chaque partie au transfert de l'information.

Pour remplir une base de données, il est connu de collecter de l'information puis de remplir des champs de ladite base de données. Dans le domaine de l'authentification, pour authentifier un utilisateur, source ou destinataire d'information, il est actuellement connu de faire venir ledit utilisateur en lui demandant une pièce d'identité et, éventuellement, une preuve de domicile puis de lui remettre une racine de certificat électronique qui lui permet, une fois qu'il utilise son ordinateur, d'obtenir un certificat électronique qui reste attaché à son ordinateur.

Cette procédure est très contraignante pour l'utilisateur. De plus, si le destinataire d'information ne possède pas de certificat, l'utilisateur qui lui envoie de l'information ne peut, actuellement, le référencer dans la base de données.

La présente invention entend remédier à ces inconvénients.

A cet effet, la présente invention vise, selon un quatrième aspect, un procédé d'autorisation d'accès d'un utilisateur à une ressource accessible par l'intermédiaire d'un réseau informatique, caractérisé en ce qu'il comporte :
- une étape de fourniture, sur le réseau informatique, par ledit utilisateur, d'une adresse électronique dont il dispose,
- une étape de transmission, par un serveur, à ladite adresse électronique dudit utilisateur, d'un courrier électronique invitant ledit utilisateur à y répondre,
- une étape de fourniture, par ledit utilisateur, d'une adresse "unique" dudit utilisateur sur un réseau de communication à adresses uniques différent dudit réseau informatique,
- lorsque l'utilisateur répond audit courrier électronique, une étape de transmission, par ledit serveur, à ladite adresse unique, d'une information non prédictible,
- une étape de transmission, par ledit utilisateur, audit serveur, de ladite information non prédictible,
- une première étape de vérification de correspondance de ladite information non prédictible transmise par ledit serveur et de ladite information non prédictible transmise par ledit utilisateur,
- si la vérification de correspondance de l'information non prédictive est positive, une étape de mémorisation, associée à l'adresse unique de l'utilisateur, de l'adresse électronique de l'utilisateur.

Grâce à ces dispositions, le référencement de l'utilisateur peut être réalisé par lui-même sans qu'il ne soit besoin de se déplacer en un lieu d'enregistrement.

Selon des caractéristiques particulières, le procédé tel que succinctement exposé ci-dessus comporte, en outre :
- une étape de transmission, par ledit utilisateur, audit serveur, d'information confidentielle et d'information d'identification,
- une deuxième étape de vérification, par un serveur de correspondance de ladite information confidentielle et de ladite information d'identification,
- si, d'une part, la vérification de correspondance de l'information non prédictive est positive, et, d'autre part, la vérification de correspondance de l'information confidentielle est positive, une étape de mémorisation, associée à l'adresse unique de l' utilisateur, de l'adresse électronique de l' utilisateur, de l'information confidentielle et de l'information d'identification.

Selon des caractéristiques particulières, ladite information confidentielle identifie un moyen de paiement, par exemple des coordonnées d'un compte bancaire, d'une carte bancaire, éventuellement à usage unique ou d'un porte-monnaie électronique.

Grâce à chacune de ces dispositions, l'utilisateur peut utiliser des services confidentiels, par exemple accéder à des données financières, sociales ou fiscales ou effectuer des paiements.

Selon des caractéristiques particulières, le procédé tel que succinctement exposé ci-dessus comporte une répétition de la deuxième étape de vérification, qui concerne l'information confidentielle. Ainsi, si un utilisateur n'est plus adhérent à un service, la deuxième étape de vérification donne un résultat négatif et des mesures peuvent être prises pour empêcher l'utilisateur d'utiliser lesdits services. Selon des caractéristiques particulières, la répétition de la deuxième étape de vérification a lieu :
- à chaque tentative d'accès audit service ;
- à chaque paiement ;
- à chaque fois qu'un mode de paiement est sélectionné.

Grâce à ces dispositions, la validité de l'accès ou du paiement est vérifiée à chaque tentative d'accès ou de paiement.

Selon des caractéristiques particulières, au cours de l'étape de fourniture d'une adresse unique, ledit réseau de communication est un réseau téléphonique. Ainsi, le procédé est d'une mise en oeuvre aisée et ne nécessite pas que l'utilisateur dispose de moyens spécifiques pour l'authentification.

Selon des caractéristiques particulières, le courrier électronique comporte un lien vers une adresse sur le réseau informatique et l'utilisateur répond au courrier électronique en cliquant sur ledit lien. La mise en oeuvre du procédé est ainsi facilitée puisque l'utilisateur répond, par une simple sélection du lien dans le message électronique.

Selon des caractéristiques particulières, le procédé tel que succinctement exposé ci-dessus comporte une opération de fourniture de données par l'utilisateur et ladite information non prédictible est représentative desdites données. grâce à ces dispositions, l'information non prédictible est associée définitivement aux données transmises et correspond donc aux règlements en vigueur dans le domaine de la signature électronique.

Selon des caractéristiques particulières, le procédé tel que succinctement exposé ci-dessus comporte une étape de détermination d'un identifiant ou d'un mot de passe de l'utilisateur et, au cours de l'étape de mémorisation, ledit identifiant ou ledit mot de passe est associé à l'adresse électronique et l'adresse unique de l'utilisateur. Ainsi, une sécurité supplémentaire est ajoutée car, même si un tiers disposait simultanément de l'adresse électronique et de l'adresse unique, il ne pourrait pas effectuer d'authentification sans l'identifiant ou le mot de passe de l'utilisateur.

Selon des caractéristiques particulières, le procédé tel que succinctement exposé ci-dessus comporte une étape de signature électronique, par ledit serveur, de données transmises par l'utilisateur. Grâce à ces dispositions, l'utilisateur peut utiliser différents terminaux pour signer des données transmises, même si ces terminaux ne disposent pas de l'adresse électronique de l'utilisateur, celle-ci étant mise en oeuvre par le serveur.

Selon des caractéristiques particulières, le procédé tel que succinctement exposé ci-dessus comporte une étape de transmission, par l'utilisateur, d'un condensât de données de l'utilisateur. Grâce à ces dispositions, l'intégrité des données de l'utilisateur peut être garantie par la vérification du condensât, par le serveur et/ou par l'utilisateur.

Selon des caractéristiques particulières, le procédé tel que succinctement exposé ci-dessus comporte une étape de mise en oeuvre d'un certificat électronique de l'utilisateur et l'étape de mémorisation comporte une étape d'association, dans la base de données, d'une identification dudit certificat électronique ou d'un organisme ayant émis ledit certificat électronique à l'adresse électronique de l'utilisateur et à l'adresse unique de l'utilisateur. Grâce à ces dispositions, l'authentification réduite qu'offre le certificat électronique est grandement renforcée par l'authentification et la traçabilité qu'assure la transmission de l'information non prédictible à l'adresse unique de l'utilisateur.

Selon un cinquième aspect, la présente invention vise un dispositif de d'autorisation d'accès d'un utilisateur à une ressource accessible par l'intermédiaire d'un réseau informatique, caractérisé en ce qu'il comporte un terminal adapté à la fourniture, sur le réseau informatique, par ledit utilisateur, d'une adresse électronique dont il dispose, un moyen de transmission, par un serveur, à ladite adresse électronique dudit utilisateur, d'un courrier électronique invitant ledit utilisateur à y répondre, ledit terminal étant, en outre, adapté à la fourniture, par ledit utilisateur, d'une adresse "unique" dudit utilisateur sur un réseau de communication à adresses uniques différent dudit réseau informatique, le serveur étant adapté, lorsque l'utilisateur répond audit courrier électronique, à transmettre, à ladite adresse unique, une information non prédictible, ledit terminal étant adapté à transmettre audit serveur, ladite information non prédictible, ledit serveur étant adapté à vérifier la correspondance de ladite information non prédictible transmise par ledit serveur et de ladite information non prédictible transmise par ledit utilisateur, et si la vérification de correspondance de l'information non prédictive est positive, à mémoriser l'adresse électronique de l'utilisateur associée à l'adresse unique de l'utilisateur.

Les buts, avantages et caractéristiques particulières de ce cinquième aspect étant identiques à ceux du quatrième aspect, ils ne sont pas rappelés ici.

D'autres avantages, buts et caractéristiques de la présente invention, ressortiront de la description qui va suivre faite dans un but explicatif et nullement limitatif en regard des dessins annexés dans lesquels :
- la figure 1 représente une succession de transmissions de messages conformément à une mise en oeuvre exemplaire de la présente invention,
- la figure 2 représente une succession d'opérations mises en oeuvre conformément à un aspect exemplaire de la présente invention,
- la figure 3 représente des transmissions de messages entre des entités participant à une transaction, selon un second mode de réalisation,
- la figure 4 représente une succession d'opérations effectuées par un terminal utilisateur et un serveur de certification, dans un mode de réalisation particulier de la présente invention,
- la figure 5 représente des champs d'un certificat conforme à l'infrastructure à clés publiques PKI, conformément à un aspect de la présente invention et des champs d'une base de données conformes à un autre aspect de la présente invention,
- la figure 6 représente un mode de réalisation d'un dispositif conforme au cinquième aspect de la présente invention,
- la figure 7 représente une succession d'opérations d'un mode de réalisation d'un procédé conforme au quatrième aspect de la présente invention,
- les figures 8A et 8B représentent une succession d'opérations d'un deuxième mode de réalisation d'un procédé conforme au quatrième aspect de la présente invention,
- la figure 9 représente une succession d'opérations d'un troisième mode de réalisation d'un procédé conforme au quatrième aspect de la présente invention, et
- la figure 10 représente une succession d'opérations d'un quatrième mode de réalisation d'un procédé conforme au quatrième aspect de la présente invention.

Dans toute la description, le terme "terminal à adresse unique" indique un terminal sur un réseau de communication dont l'adresse ne peut être attribuée à un autre terminal. Par exemple, un téléphone ou un pageur est un terminal à adresse unique.

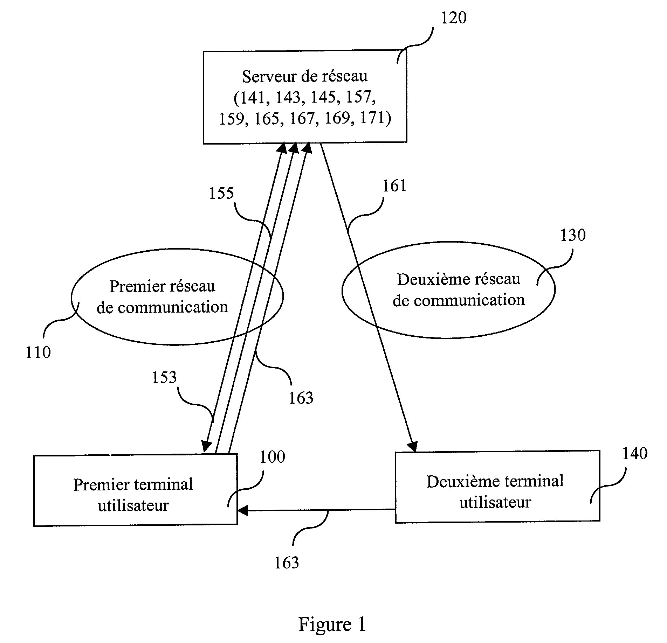

En figure 1 sont représentés un premier terminal utilisateur 100 connecté, par l'intermédiaire d'un premier réseau de communication 110, à un serveur de réseau 120, lui-même connecté à un deuxième réseau de communication 130 auquel est aussi relié un deuxième terminal de communication 140.

Le premier terminal utilisateur 100 est, par exemple, un ordinateur personnel (connu sous le nom de "PC" pour "personal computer") ou un ordinateur de réseau (connu sous le nom de "NC" pour "network computer") ou tout dispositif permettant de se connecter au serveur 120 par l'intermédiaire du premier réseau 110.

Le premier réseau de communication 110 est, par exemple, le réseau internet. Le serveur de réseau 120 est de type connu. Il est adapté à recevoir de l'information de la part du premier terminal 100, à déchiffrer une partie au moins de cette information, à lancer une communication avec le deuxième terminal 140, par exemple par l'intermédiaire d'une passerelle et à transmettre de l'information audit deuxième terminal 140. Le deuxième réseau de communication 130 est un réseau de communication à adresses uniques, c'est-à-dire que sur le deuxième réseau de communication 130, chaque terminal, par exemple le deuxième terminal 140, possède une adresse qui lui est propre. Par exemple le deuxième réseau 130 est un réseau téléphonique, par exemple de téléphonie mobile.

Tout d'abord, le premier terminal utilisateur 100 ouvre une session de communication avec le serveur de réseau 120, par l'intermédiaire du premier réseau de communication 110, de manière connue, opération 153. Cette session peut être permanente ou non. Cette session peut être soit directement établie entre le premier terminal utilisateur 100 et le serveur de réseau 120, soit par l'intermédiaire d'un serveur tiers, par exemple un serveur de site marchand ou de déclaration sociale ou fiscale, ou de courrier électronique et ce, soit par l'utilisation d'un lien électronique, soit par deux sessions simultanées, l'une entre le premier terminal utilisateur 100 et le serveur du site tiers et l'autre entre le serveur de site tiers et le serveur de réseau 120.

Ensuite, au cours d'une opération de transmission d'information 155, le premier terminal utilisateur 100 transmet au serveur de réseau 120 une information d'identification permettant au serveur de réseau 120 de déterminer l'adresse unique du deuxième terminal 140.

Dans des modes de réalisation exemplaires, l'information d'identification comporte un mot de passe et un nom d'utilisateur qui ont été préalablement déterminés entre l'utilisateur du premier terminal utilisateur 100 et le serveur de réseau 120.

Dans des modes de réalisation exemplaires, l'information d'identification comporte, de manière chiffrée, une adresse unique du deuxième terminal 140 sur le deuxième réseau de communication 130. Par exemple, le chiffrement de l'adresse unique est effectué avec une clé privée de l'utilisateur conforme à l'infrastructure PKI.

Dans un mode de réalisation exemplaire, l'information d'identification comporte l'adresse du deuxième terminal 140, chiffrée grâce à une clé publique dont la clé privée est détenue par le serveur de réseau 120.

Dans des modes de réalisation exemplaires, le premier terminal utilisateur 100 transmet au serveur de réseau 120, un certificat conforme à l'infrastructure à clés publiques PKI ("Public Key Infrastructure").

Dans des modes de réalisation exemplaires, le premier terminal utilisateur 100 transmet au serveur de réseau 120, un certificat conforme à l'infrastructure à clés publiques PKI ("Public Key Infrastructure") qui comporte un champ dans lequel se trouve, de manière chiffrée, l'adresse unique du deuxième terminal utilisateur 140.

Dans des modes de réalisation exemplaires, le premier terminal utilisateur 100 transmet au serveur de réseau 120, un certificat conforme à l'infrastructure à clés publiques PKI ("Public Key Infrastructure") qui comporte un champ dans lequel se trouve, de manière chiffrée avec une clé publique dont la clé privée est détenue par le serveur de réseau 120, l'adresse unique du deuxième terminal utilisateur 140.

Dans des modes de réalisation exemplaires, le premier terminal utilisateur 100 transmet au serveur de réseau 120, un certificat conforme à l'infrastructure à clés publiques PKI ("Public Key Infrastructure") qui comporte :
- un champ dans lequel se trouve, de manière chiffrée avec une clé publique dont la clé privée est détenue par le serveur de réseau 120, l'adresse unique du deuxième terminal utilisateur 140,
- un ou plusieurs champs d'un autre certificat conforme à l'infrastructure à clés publiques PKI, et
- dans des modes de réalisation exemplaires, un pointeur vers un serveur de tiers de confiance qui authentifie l'un des certificats.

Le serveur de réseau 120 détermine, à partir d'une base de données utilisateur ou par déchiffrement de l'information d'identification transmise au cours de l'opération 155, l'adresse unique du deuxième terminal 140, opération 157. Ensuite, le serveur de réseau 120 détermine une information non prédictible, opération 159. Dans un mode de réalisation exemplaire, l'information non prédictible dépend de l'identité de l'utilisateur du premier terminal utilisateur 100, d'un montant de transaction, d'un certificat émis par ledit utilisateur et/ou d'information à signer par ledit utilisateur, tout ou partie de cette information pouvant être fournie par un site tiers, intermédiaire dans la session, cité plus haut. Par exemple, si l'utilisateur a transmis de l'information à signer, l'information non prédictible dépend d'un condensât (en anglais "hash") de ladite information. Le serveur de réseau 120 transmet, par l'intermédiaire du deuxième réseau de communication 130, au deuxième terminal utilisateur 140, ladite information non prédictible, opération 161. Dans des modes de réalisation exemplaires, ladite information est transmise sous la forme d'un message court (connu sous le nom de SMS pour Short Message System.)

L'utilisateur du premier terminal 100 et du deuxième terminal 140 retransmet au serveur de réseau 120 ladite information non prédictible, par l'intermédiaire du premier réseau de communication 110, opération 163. Par exemple, l'utilisateur lit ladite information non prédictible sur l'écran du deuxième terminal utilisateur 140 et saisit cette information non prédictible sur un clavier du premier terminal utilisateur 100. Selon un autre exemple, l'utilisateur connecte, par exemple, par une liaison infrarouge, les terminaux 100 et 140 afin que l'information non prédictible transite, sous le contrôle de l'utilisateur, et automatiquement du terminal 140 au terminal 100.

Le serveur de réseau 120 vérifie la conformité de l'information qu'il reçoit du premier terminal 100 avec l'information non prédictible transmise au deuxième terminal utilisateur 140, opération 165. En cas de concordance, le serveur de réseau 120 autorise l'accès de l'utilisateur à une ressource accessible par le premier réseau de communication 110, opération 167. Une telle ressource est, par exemple, un paiement, une authentification, un service réservé à un abonné, une signature d'information. Préférentiellement, l'ensemble des opérations 153 à 267 est effectué pendant la session ouverte au cours de l'opération 153.

Dans le cas où une information (un bon de commande, un e-mail, un paiement) est signée en mettant en oeuvre les opérations décrites ci-dessus, un tiers destinataire de ladite information peut demander à vérifier la signature et/ou à déchiffrer l'information. Dans ce cas, le tiers destinataire interroge le serveur de réseau 120, opération 169. Dans des modes de réalisation exemplaires, la base de données conservée par ledit serveur de réseau 120 comporte un moyen d'obtention de ladite adresse unique du deuxième terminal 140 (par exemple l'adresse unique ou une clé privée de déchiffrement de l'adresse unique transmise par l'utilisateur) et un pointeur d'une base de données de certification d'un tiers certificateur qui conserve les informations nécessaires pour vérifier la signature électronique. Le serveur de réseau 120 redirige alors le tiers destinataire vers le serveur du tiers certificateur, opération 171.

Dans des modes de réalisation exemplaires, le tiers destinataire interroge directement la base de données de certification du tiers certificateur.

Un utilisateur qui souhaite bénéficier des avantages de la présente invention s'inscrit d'abord auprès du tiers certificateur. A cet effet, selon les réglementations en vigueur, l'utilisateur fournit des preuves de son identité au tiers certificateur et celui-ci, dans des modes de réalisation exemplaires, lui fournit une racine de certificat qui permet à l'utilisateur de mettre en oeuvre, sur son premier terminal, un premier certificat électronique. L'utilisateur fournit au gestionnaire du serveur de réseau 120, une facture d'abonnement au réseau sur lequel l'utilisateur utilise le deuxième terminal, ladite facture correspondant au deuxième terminal et un moyen de vérifier le premier certificat électronique, opération 141. Le serveur de réseau 120 fournit au premier terminal 100 un deuxième certificat électronique qui, conformément à un aspect de la présente invention permet au serveur de réseau 120 de déterminer l'adresse unique du deuxième terminal 140 sur le deuxième réseau de communication 130 et un pointeur permettant de relier le second certificat électronique à la base de données du tiers certificateur, opération 145. Par exemple, le deuxième certificat comporte, de manière chiffrée par une clé publique du serveur de réseau 120, l'adresse du deuxième terminal 140 sur le deuxième réseau, le serveur de réseau 120 effectuant l'opération 143 de chiffrement correspondante. Dans des modes de réalisation exemplaires, le deuxième certificat comporte une identification du tiers certificateur, par exemple sous la forme d'un pointeur.

Dans des modes de réalisation, le serveur de réseau 120 conserve dans une base de données, l'adresse du deuxième terminal 140 et un pointeur correspondant à la base de données du tiers certificateur.

Dans des modes de réalisation exemplaires, le deuxième certificat comporte ladite adresse unique du deuxième terminal 140 sur le deuxième support de communication 130 et pointe sur, c'est-à-dire identifie ou comporte, un autre certificat, par exemple conforme à l'infrastructure à clé publique PKI qui ne comporte pas ladite adresse unique.

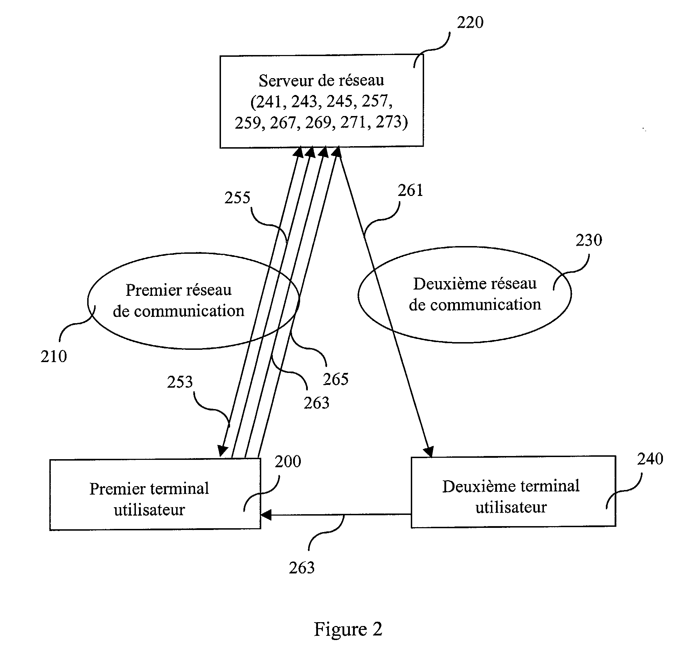

En figure 2 sont représentés un premier terminal utilisateur 200 connecté, par l'intermédiaire d'un premier réseau de communication 210 à un serveur de réseau 220, lui-même connecté à un deuxième réseau de communication 230 auquel est aussi relié un deuxième terminal de communication 240.

Le premier terminal utilisateur 200 est, par exemple, un ordinateur personnel (connu sous le nom de "PC" pour "personal computer") ou un ordinateur de réseau (connu sous le nom de "NC" pour "network computer") ou tout dispositif permettant de se connecter au serveur 220 par l'intermédiaire du premier réseau 210.

Le premier réseau de communication 210 est, par exemple, le réseau internet. Le serveur de réseau 220 est de type connu. Il est adapté à recevoir de l'information de la part du premier terminal 200, à lancer une communication avec le deuxième terminal 240, par exemple par l'intermédiaire d'une passerelle et à transmettre de l'information audit deuxième terminal 240. Le deuxième réseau de communication 230 est un réseau de communication à adresses uniques, c'est-à-dire que sur le deuxième réseau de communication 230, chaque terminal, par exemple le deuxième terminal 240, possède une adresse qui lui est propre. Par exemple le deuxième réseau 230 est un réseau téléphonique, par exemple de téléphonie mobile.

Tout d'abord, le premier terminal utilisateur 200 ouvre une session de communication avec le serveur de réseau 220, par l'intermédiaire du premier réseau de communication 210, de manière connue, opération 253. Cette session peut être permanente ou non. Cette session peut être soit directement établie entre le premier terminal utilisateur 200 et le serveur de réseau 220, soit par l'intermédiaire d'un serveur tiers, par exemple un serveur de site marchand ou de déclaration sociale ou fiscale, ou de courrier électronique et ce, soit par l'utilisation d'un lien électronique, soit par deux sessions simultanées, l'une entre le premier terminal utilisateur 200 et le serveur du site tiers et l'autre entre le serveur de site tiers et le serveur de réseau 220.

Ensuite, au cours d'une opération de transmission d'information 255, le premier terminal utilisateur 200 transmet au serveur de réseau 220 une information d'identification permettant au serveur de réseau 220 de déterminer l'adresse unique du deuxième terminal 240.

Dans des modes de réalisation exemplaires, l'information d'identification comporte un mot de passe et un nom d'utilisateur qui ont été préalablement déterminés entre l'utilisateur du premier terminal utilisateur 200 et le serveur de réseau 220.

Dans des modes de réalisation exemplaires, l'information d'identification comporte, de manière chiffrée, une adresse unique du deuxième terminal 240 sur le deuxième réseau de communication 230. Par exemple, le chiffrement de l'adresse unique est effectué avec une clé privée de l'utilisateur conforme à l'infrastructure PKI.

Dans un mode de réalisation exemplaire, l'information d'identification comporte l'adresse du deuxième terminal 240, chiffrée grâce à une clé publique dont la clé privée est détenue par le serveur de réseau 220.

Dans des modes de réalisation exemplaires, le premier terminal utilisateur 200 transmet au serveur de réseau 220, un certificat conforme à l'infrastructure à clés publiques PKI ("Public Key Infrastructure").

Dans des modes de réalisation exemplaires, le premier terminal utilisateur 200 transmet au serveur de réseau 220, un certificat conforme à l'infrastructure à clés publiques PKI ("Public Key Infrastructure") qui comporte un champ dans lequel se trouve, de manière chiffrée, l'adresse unique du deuxième terminal utilisateur 240.

Dans des modes de réalisation exemplaires, le premier terminal utilisateur 200 transmet au serveur de réseau 220, un certificat conforme à l'infrastructure à clés publiques PKI ("Public Key Infrastructure") qui comporte un champ dans lequel se trouve, de manière chiffrée avec une clé publique dont la clé privée est détenue par le serveur de réseau 220, l'adresse unique du deuxième terminal utilisateur 240.

Dans des modes de réalisation exemplaires, le premier terminal utilisateur 200 transmet au serveur de réseau 220, un certificat conforme à l'infrastructure à clés publiques PKI ("Public Key Infrastructure") qui comporte :
- un champ dans lequel se trouve, de manière chiffrée avec une clé publique dont la clé privée est détenue par le serveur de réseau 220, l'adresse unique du deuxième terminal utilisateur 240,
- un ou plusieurs champs d'un autre certificat conforme à l'infrastructure à clés publiques PKI, et
- dans des modes de réalisation exemplaires, un pointeur vers un serveur de tiers de confiance qui authentifie l'un des certificats.

Le serveur de réseau 220 détermine, à partir d'une base de données utilisateur ou par déchiffrement de l'information d'identification transmise au cours de l'opération 255, l'adresse unique du deuxième terminal 240, opération 257. Ensuite, le serveur de réseau 220 détermine une information non prédictible, opération 259. Dans un mode de réalisation exemplaire, l'information non prédictible dépend de l'identité de l'utilisateur du premier terminal utilisateur 200, d'un montant de transaction, d'un certificat émis par ledit utilisateur et/ou d'information à signer par ledit utilisateur, tout ou partie de cette information pouvant être fournie par un site tiers, intermédiaire dans la session, cité plus haut. Par exemple, si l'utilisateur a transmis de l'information à signer, l'information non prédictible dépend d'un condensât (en anglais "hash") de ladite information. Le serveur de réseau 220 transmet, par l'intermédiaire du deuxième réseau de communication 230, au deuxième terminal utilisateur 240, ladite information non prédictible, opération 261. Dans des modes de réalisation exemplaires, ladite information est transmise sous la forme d'un message court (connu sous le nom de SMS pour Short Message System.)

L'utilisateur du premier et du deuxième terminaux utilisateur 200 et 240 retransmet au serveur de réseau 220 ladite information non prédictible, par l'intermédiaire du premier réseau de communication 210, opération 263. Par exemple, l'utilisateur lit ladite information non prédictible sur l'écran du deuxième terminal utilisateur 240 et saisit cette information non prédictible sur un clavier du premier terminal utilisateur 200. Selon un autre exemple, l'utilisateur connecte, par exemple, par une liaison infrarouge, les terminaux 200 et 240 afin que l'information non prédictible transite, sous le contrôle de l'utilisateur, et automatiquement du terminal 240 au terminal 200.

Conformément à un aspect de la présente invention, la transmission de l'information non prédictible par le premier terminal 200 provoque la mise en oeuvre ou la transmission d'un certificat utilisateur conservé sur le premier terminal utilisateur 200 de telle manière que l'information reçue par le serveur de réseau 220 dépend dudit certificat utilisateur, opération 265. Dans des modes de réalisation exemplaires, ledit certificat utilisateur est conforme à l'infrastructure à clés publiques PKI.

Le serveur de réseau 220 vérifie la conformité de l'information qu'il reçoit du premier terminal 200 avec l'information non prédictible transmise au deuxième terminal utilisateur 240, opération 267. Par exemple, l'information non prédictible a été signée par le certificat utilisateur (la clé privée dans le cas d'un certificat utilisateur conforme à l'infrastructure PKI) et le serveur de réseau 220 déchiffre (avec la clé publique correspondant à la clé privée, dans le cas d'un certificat utilisateur conforme à l'infrastructure PKI) l'information non prédictible. En cas de concordance, le serveur de réseau 220 autorise l'accès de l'utilisateur à une ressource accessible par le premier réseau de communication 110, opération 269. Une telle ressource est, par exemple, un paiement, une authentification, un service réservé à un abonné, une signature d'information, opération 269. Préférentiellement, l'ensemble des opérations 253 à 269 est effectué pendant la session ouverte au cours de l'opération 253.

Dans le cas où une information (un bon de commande, un e-mail, un paiement) est signée en mettant en oeuvre les opérations décrites ci-dessus, un tiers destinataire de ladite information peut demander à vérifier la signature et/ou à déchiffrer l'information. Dans ce cas, le tiers destinataire interroge le serveur de réseau 220, opération 271. Dans des modes de réalisation exemplaires, la base de données conservée par ledit serveur de réseau 220 comporte un moyen d'obtention de ladite adresse unique du deuxième terminal 240 (par exemple l'adresse unique ou une clé privée de déchiffrement de l'adresse unique transmise par l'utilisateur) et un pointeur d'une base de données de certification d'un tiers certificateur qui conserve les informations nécessaires pour vérifier la signature électronique. Le serveur de réseau 120 redirige alors le tiers destinataire vers le serveur du tiers certificateur, opération 273.

Dans des modes de réalisation exemplaires, le tiers destinataire interroge directement la base de données de certification du tiers certificateur.

Un utilisateur qui souhaite bénéficier des avantages de la présente invention s'inscrit d'abord auprès du tiers certificateur. A cet effet, selon les réglementations en vigueur, l'utilisateur fournit des preuves de son identité au tiers certificateur et celui-ci, dans des modes de réalisation exemplaires, lui fournit une racine de certificat qui permet à l'utilisateur de mettre en oeuvre, sur son premier terminal, un premier certificat électronique. L'utilisateur fournit au gestionnaire du serveur de réseau 220, une facture d'abonnement au réseau sur lequel l'utilisateur utilise le deuxième terminal, ladite facture correspondant au deuxième terminal et un moyen de vérifier le premier certificat électronique, opération 241. Le serveur de réseau 220 fournit au premier terminal 200 un deuxième certificat électronique qui, conformément à un aspect de la présente invention permet au serveur de réseau 220 de déterminer l'adresse unique du deuxième terminal 240 sur le deuxième réseau de communication et un pointeur permettant de relier le second certificat électronique à la base de données du tiers certificateur, opération 245. Par exemple, le deuxième certificat comporte, de manière chiffrée par une clé publique du serveur de réseau 220, l'adresse du deuxième terminal 240 sur le deuxième réseau, le serveur de réseau 220 effectuant l'opération 243 de chiffrement correspondante. Dans des modes de réalisation exemplaires, le deuxième certificat comporte une identification du tiers certificateur, par exemple sous la forme d'un pointeur.

Dans des modes de réalisation, le serveur de réseau 220 conserve dans une base de données, l'adresse du deuxième terminal 240 et un pointeur correspondant à la base de données du tiers certificateur.

Dans des modes de réalisation exemplaires, le deuxième certificat comporte ladite adresse unique du deuxième terminal 240 sur le deuxième support de communication 230 et pointe sur, c'est-à-dire identifie ou comporte, un autre certificat, par exemple conforme à l'infrastructure à clé publique PKI qui ne comporte pas ladite adresse unique.

Dans des modes de réalisation exemplaires, un site marchand met en oeuvre un certificat conforme à la norme PKI puis, par exemple en fonction d'un montant d'intérêts en jeu ou de paiement, le site marchand transmet une requête d'authentification au serveur de réseau 220 en identifiant le client grâce aux informations du certificat conforme à la norme PKI. Le serveur de réseau 220 détermine alors l'adresse unique du deuxième terminal utilisateur 240 comme indiqué ci-dessus et transmet une information non prédictible à ce deuxième terminal utilisateur 240. L'utilisateur du premier et du deuxième terminaux utilisateur 200 et 240 retransmet au serveur de réseau 220 ladite information non prédictible, par l'intermédiaire du premier réseau de communication 210. Par exemple, l'utilisateur lit ladite information non prédictible sur l'écran du deuxième terminal utilisateur 240 et saisit cette information non prédictible sur un clavier du premier terminal utilisateur 200. Selon un autre exemple, l'utilisateur connecte, par exemple, par une liaison infrarouge, les terminaux 200 et 240 afin que l'information non prédictible transite, sous le contrôle de l'utilisateur, et automatiquement du terminal 240 au terminal 200.

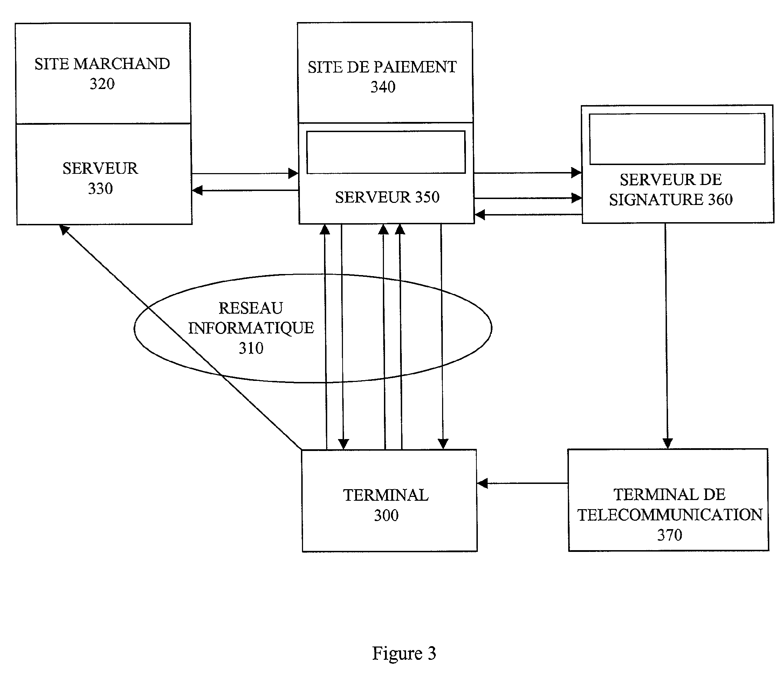

Dans le schéma de transaction exposé en figure 3, un client est inscrit et possède un compte chez un organisme financier qui met en oeuvre un serveur de paiement adapté à déterminer une adresse de terminal sur un support de communication dans lequel chaque adresse est attribuée à au plus un terminal. Ce compte lui permet d'avoir un fichier de conservation de données confidentielles connu sous le nom de « Server Side Wallet ». Dans ce fichier sont stockés les informations relatives au mode de paiement dont le client dispose.

L'organisme financier est de type 'Issuer', c'est-à-dire émetteur de moyen de paiement, ici à usage uniques, ou il est un intermédiaire ayant passé des accords avec des banques 'Issuer'.

Le marchand a un accord avec l'organisme financier 'Issuer' et il a un compte ouvert qui ne se substitue pas obligatoirement à son compte bancaire classique dans sa banque dite 'Acquirer' car elle reçoit les paiements pour le compte du marchand.

Le marchand présente, sur la page de paiement de son site, une icône proposant à ses clients de payer par intermédiaire d'un moyen de paiement appelé. On observe que cette icône peut être celle d'une banque ou d'un type de carte bancaire.

Dans le mode de réalisation particulier illustré en figure 3, un client accède, par l'intermédiaire d'un terminal 300 et d'un réseau informatique 310, par exemple Internet, à un site marchand 320, hébergé par un serveur de réseau 330. Le client s'identifie en donnant ses noms, prénoms et adresse ou par la transmission, par le terminal 300 d'un certificat unique délivré au client, par exemple un certificat lié à l'infrastructure à clé publique PKI. Pour payer, on suppose dans la suite de la description de la figure 3 que le client sélectionne une option de paiement par moyen de paiement à usage unique électronique proposée par le site marchand 320. On observe que le site marchand 320 peut ne proposer que cette option, car, à la différence des paiements par carte bancaire sans signature, le client ne peut pas répudier un paiement fait avec signature ou authentification.

Le serveur de réseau 330 transfert alors le client sur un site de paiement 340 hébergé par un serveur de réseau 350, ou serveur de paiement. Dans des modes de réalisation exemplaires préférentiels, le serveur de réseau 330 du site marchand 320 transmet au serveur de réseau 350 du site de paiement 340 de l'information représentative de l'identité du marchand, de références bancaires du marchand, de l'identité du client, d'un certificat unique délivré au client conformément à l'infrastructure à clé publique PKI, du montant de la transaction, de l'horodatage et/ou des biens ou services objets de la transaction. Dans des modes de réalisation exemplaires, le client fournit tout ou partie de ces informations au serveur 350 par l'intermédiaire du terminal 300, par exemple par transmission d'un certificat unique délivré au client conformément à l'infrastructure à clé publique PKI ou par saisie au clavier.

Le serveur de paiement 350 détermine si le paiement peut être autorisé, par exemple en fonction de l'identité du client, du montant du paiement, d'un état d'un compte financier ou bancaire du client, selon des procédures connues. Si le paiement peut être autorisé, le serveur 350 du site de paiement 340 transmet le certificat conforme à l'infrastructure PKI à un serveur de signature 360 qui effectue une authentification de manière similaire à celles effectuées par l'un des serveurs de réseau 120 et 220 décrites précédemment.

En variante, le serveur de signature 360 ou le serveur de paiement 350 transmet au terminal 300 une information, par exemple une image, représentative d'un moyen de paiement à usage unique électronique, par exemple une image de chèque, au terminal 300 du client. Dans des modes de réalisation exemplaires, ce moyen de paiement à usage unique électronique est déjà partiellement ou complètement pré-rempli, avec tout ou partie de l'information transmise précédemment par le client ou le site marchand 320. Le client valide ou non le paiement en saisissant l'information non prédictible reçu sur un terminal de télécommunication 370 (le deuxième terminal utilisateur) lié au client.

On observe que l'information non prédictible, aussi appelée "sceau à usage unique", prend la forme d'une séquence de symboles qui, dans des modes de réalisation exemplaires, dépend d'au moins un élément de la transaction, par exemple, le montant, l'identité du marchand, l'identité du client, un certificat unique délivré au client, l'horodatage et/ou l'objet de la transaction. Par exemple, le sceau est déterminé comme une fonction mathématique (par exemple un "hash" ou condensât) de tout ou partie de ces éléments. Préférentiellement, le sceau dépend de l'identité du client et/ou d'un certificat unique délivré au client (par exemple lié à l'infrastructure PKI pour "public Key Infrastructure" ou infrastructure à clé publique).

Dans des modes de réalisation exemplaires, le serveur de signature 360 transmet au terminal de télécommunication 370 au moins un élément de la transaction, par exemple, le montant, l'identité du marchand, l'identité du client, l'horodatage et/ou l'objet de la transaction en plus du sceau.

Dans des modes de réalisation exemplaires, pour valider le paiement, le client lit le sceau sur un écran du terminal 370 ou écoute la séquence de symbole dictée par un serveur vocal sur un haut-parleur du terminal 370 puis saisit le sceau sur le terminal 300, par exemple au clavier ou par dictée vocale. Dans des variantes, le client connecte le terminal 370 au terminal 300 pour que la transmission du sceau ait lieu automatiquement.

En cas d'absence de correspondance entre le sceau émis par le serveur de signature 360 et le sceau reçu par le serveur 360, le serveur de signature 360 transmet une information de défaut de signature au serveur 350 et le serveur 350 informe le client du défaut de signature et lui redemande de fournir le sceau et les opération de vérification de sceau sont répétées. Après trois échecs, le serveur de signature 360 invalide le sceau et le serveur de paiement 350 transmet une information d'absence de paiement au serveur 330.

Bien que, dans la description de la figure 3, les serveurs 330, 350 et 360 aient été représentés comme séparés, dans des modes de réalisation exemplaires, au moins deux des serveurs 330, 350 et 360 peuvent être confondus.

Préférentiellement, les opérations effectuées par le serveur de signature 360 ont toutes lieu au cours de la même session de communication entre le terminal 300 et le serveur 350. Préférentiellement, cette session de communication est sécurisée, par exemple encryptée selon le standard d'encryption SSL.

Dans des modes de réalisation exemplaires, le sceau est pris parmi un ensemble de numéros similaires à des numéros de carte de paiement embossées de telle manière que le site marchand 320 utilise ce sceau comme un numéro de carte de paiement classique, tout en sachant que le paiement le peut plus être répudié par la client.

Eventuellement, le serveur de paiement ou le serveur de signature détermine une durée maximale de validité du numéro de moyen de paiement à usage unique et/ou du sceau. Eventuellement, le serveur de signature transmet au terminal 370, le montant du paiement et/ou un identifiant du site marchand.

Dans des modes de réalisation exemplaires, le numéro de paiement à usage unique prend la forme d'un numéro de carte de paiement de type connu et l'utilisateur utilise le numéro de paiement à usage unique comme un numéro de carte de paiement embossé sur une carte de paiement en matière plastique.

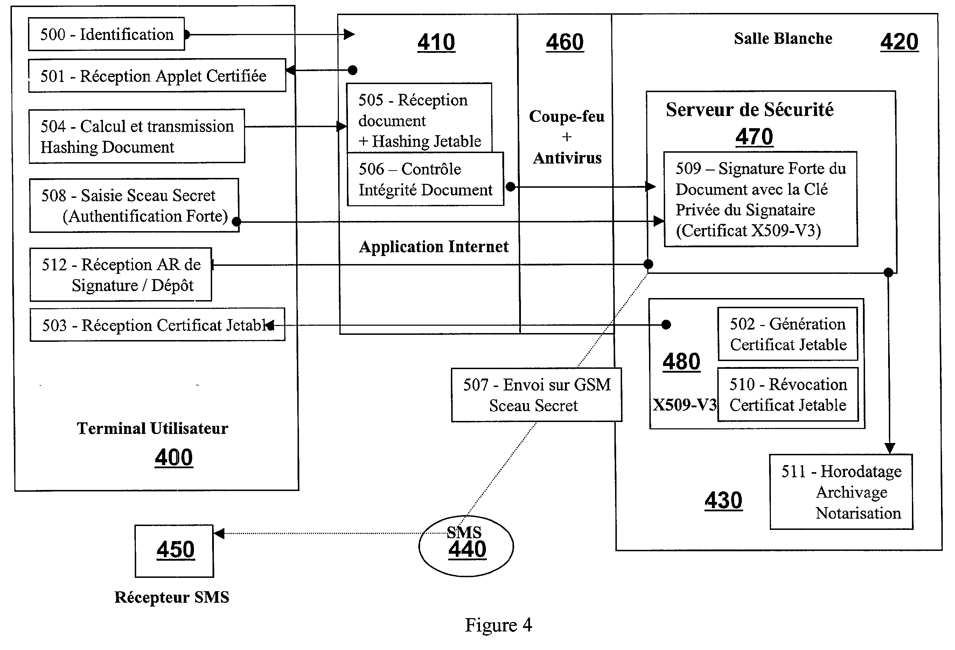

En figure 4 sont représentés un poste utilisateur ou système informatique émetteur 400, une application Internet 410, une salle blanche 420, une mémoire de stockage 430, un deuxième réseau de communication 440 et un récepteur 450 sur le deuxième réseau de communication 440. La salle blanche 420 comporte une protection pare-feu (en anglais "firewall") 460, un serveur de sécurité 470 et un générateur de certificats 480. Les opérations effectuées dans le mode de réalisation particulier illustré en figure 4 sont représentées dans des rectangles et numérotées de 500 à 512. L'application Internet 410 et la salle blanche 420 sont conjointement appelé système informatique récepteur.

Le poste utilisateur 400 est, par exemple, un ordinateur personnel (PC), un ordinateur de réseau (NC) ou un assistant numérique personnel (en anglais Personal Digital Assistant ou PDA) ou tout terminal permettant une communication à distance, borne interactive, décodeur T.V., .... Le poste utilisateur 400 est doté d'un logiciel de communication à distance pour mettre en oeuvre l'application Internet 410, conjointement avec le serveur de sécurité 470. Ce logiciel de communication à distance peut être un logiciel de navigation ou un logiciel de courrier électronique, par exemple.

L'application Internet 410 permet la communication entre le poste utilisateur 400 et le serveur de sécurité 470 et la transmission de données depuis le poste utilisateur 400 vers la mémoire de stockage 430, par exemple par l'intermédiaire du serveur de sécurité 470. La salle blanche 420 est un espace protégé contre toute intrusion physique, telle qu'une salle de coffre d'une banque. La mémoire de stockage 430 est une mémoire adaptée à conserver des données pendant une longue période, qui dépasse une année.

Le deuxième réseau de communication 440 est, par exemple, un réseau téléphonique et, encore plus particulièrement un réseau de téléphonie mobile ou de récepteurs alphanumériques communément appelés "pageurs". Le deuxième réseau 440 est appelé "deuxième" par comparaison avec le réseau Internet, que l'on nomme aussi "premier" réseau dans la suite de la présente demande de brevet. Le deuxième réseau 440 est adapté à transmettre une clé, un sceau, un condensât ou un certificat depuis le serveur de sécurité 470 jusqu'au récepteur 450. Le récepteur 450 sur le deuxième réseau 440 peut, selon le type de deuxième réseau 440, être un téléphone mobile, un pageur ou un récepteur quelconque. Le récepteur 450 permet à l'utilisateur du poste utilisateur 400 de prendre connaissance d'informations transmises par le serveur de sécurité 670.

La protection pare-feu 460 est de type matérielle et/ou logicielle et interdit toute intrusion logicielle dans le serveur de sécurité 470. Le serveur de sécurité 470 est un serveur informatique de type connu. Enfin, le générateur de certificats 480 est adapté à générer des certificats jetables, par exemple de type conforme à l'infrastructure à clés publiques PKI, par exemple conforme à la norme X509-V3.

Le poste utilisateur 400 et le serveur de sécurité 470 sont conjointement adaptés à mettre en oeuvre les opérations indiquées ci-dessous. Par exemple, le serveur de sécurité 470 est adapté à fournir des routines applicatives ou "applets" au poste utilisateur 400.

Au début du processus de certification, on suppose que des données sont à transmettre de manière certifiée et signée depuis le poste utilisateur 400 jusqu'à un tiers destinataire. Les données en question peuvent être fournies par l'utilisateur du poste utilisateur 400 ou par le tiers destinataire, par exemple un serveur de site marchand de site de déclaration sociale ou fiscale ou un serveur de courrier électronique.

L'utilisateur du poste utilisateur 400 se connecte au serveur de sécurité 420 pour lancer le processus de certification. Cette connexion, ou session peut être soit directement établie entre le poste utilisateur 400 et le serveur de sécurité 420, soit par l'intermédiaire d'un serveur tiers, par exemple le serveur du tiers destinataire et ce, soit par l'utilisation d'un lien électronique, soit par deux sessions simultanées, l'une entre le poste utilisateur 400 et le serveur du site tiers et l'autre entre le serveur de site tiers et le serveur de sécurité 420.

Au cours d'une opération 500, l'utilisateur du poste utilisateur 400 s'identifie en fournissant une information d'identification permettant au serveur de sécurité 420 de déterminé l'adresse unique du récepteur 450.

Dans des modes de réalisation exemplaires, l'information d'identification comporte un mot de passe et un nom d'utilisateur qui ont été préalablement déterminés entre l'utilisateur du poste utilisateur 400 et le serveur de sécurité 420.

Dans des modes de réalisation exemplaires, l'information d'identification comporte, de manière chiffrée, une adresse unique du récepteur 450. Par exemple, le chiffrement de l'adresse unique est effectué avec une clé privée de l'utilisateur conforme à l'infrastructure PKI.

Dans un mode de réalisation exemplaire, l'information d'identification comporte l'adresse du récepteur 450, chiffrée grâce à une clé publique dont la clé privée est détenue par le serveur de sécurité 420.

Dans des modes de réalisation exemplaires, un tiers fournissant les données à signer ou le tiers destinataire, fournit l'adresse unique du récepteur 450 ou le certificat conforme à l'infrastructure à clés publiques PKI de l'utilisateur, ou la clé publique de ce certificat.

Dans des modes de réalisation exemplaires, le poste utilisateur 400 transmet au serveur de sécurité 420, un certificat conforme à l'infrastructure à clés publiques PKI ("Public Key Infrastructure").

Dans des modes de réalisation exemplaires, le poste utilisateur 400 transmet au serveur de sécurité 420, un certificat conforme à l'infrastructure à clés publiques PKI ("Public Key Infrastructure") qui comporte un champ dans lequel se trouve, de manière chiffrée, l'adresse unique du récepteur 450.

Dans des modes de réalisation exemplaires, le poste utilisateur 400 transmet au serveur de sécurité 420, un certificat conforme à l'infrastructure à clés publiques PKI ("Public Key Infrastructure") qui comporte un champ dans lequel se trouve, de manière chiffrée avec une clé publique dont la clé privée est détenue par le serveur de sécurité 420, l'adresse unique du récepteur 450.

Dans des modes de réalisation exemplaires, le poste utilisateur 400 transmet au serveur de sécurité 420, un certificat conforme à l'infrastructure à clés publiques PKI ("Public Key Infrastructure") qui comporte :
- un champ dans lequel se trouve, de manière chiffrée avec une clé publique dont la clé privée est détenue par le serveur de sécurité 420, l'adresse unique du récepteur 450,
- un ou plusieurs champs d'un autre certificat conforme à l'infrastructure à clés publiques PKI, et
- dans des modes de réalisation exemplaires, un pointeur vers un serveur de tiers de confiance qui authentifie l'un des certificats.

Dans des modes de réalisation exemplaires, l'opération 500 a lieu après l'opération 503 décrite ci-dessous et le poste utilisateur 400 met en oeuvre le certificat jetable pour chiffrer l'adresse unique du récepteur 450 et transmettre l'adresse unique chiffrée au serveur de sécurité 420.

Au cours de l'opération 501, après identification de l'utilisateur au poste utilisateur 400 (par exemple par nom d'utilisateur et mot de passe), l'application Internet 410 télécharge une routine applicative certifiée et signée dans le poste utilisateur 400. On observe que la routine applicative en question peut n'être téléchargée que dans le cas où une copie de cette routine n'est pas déjà implantée dans le poste utilisateur 400. Cette caractéristique particulière permet de rendre portable le procédé de certification objet de la présente invention, sans ralentir ce processus dans le cas où l'utilisateur met successivement en oeuvre le même poste utilisateur 400, pour plusieurs certifications de données. Au cours de l'opération 502, le générateur de certificats 480 génère un certificat jetable, par exemple sous la forme d'une clé privée conforme à l'infrastructure à clés publiques PKI, par exemple conforme à la norme X509-V3. Par exemple, le certificat jetable est généré aléatoirement par le générateur 480.

Au cours de l'opération 503, le serveur de sécurité 470 transmet le certificat jetable au poste utilisateur 400. Au cours de l'opération 504, le poste utilisateur 400 met en oeuvre la routine applicative téléchargée au cours de l'opération 501 pour obtenir une trace des données à transmettre, appelé condensât (en anglais "hash"), trace qui dépend du certificat jetable généré au cours de l'opération 502 et des données à transmettre et qui permet la détection de toute modification ultérieure des données à transmettre.

Au cours de l'opération 505, les données à transmettre et le condensât sont téléchargés depuis le poste utilisateur 400 jusqu'à l'application Internet 410. De plus, des coordonnées de chaque destinataire des données à transmettre est transmis par le poste utilisateur 400 à l'application Internet 410. Ces coordonnées peuvent prendre la forme d'adresse de courrier électronique (en anglais "e-mail"), de numéro de téléphone ou de tout autre type d'information permettant de contacter chaque destinataire des données à transmettre. Au cours de l'opération 506, l'intégrité des données à transmettre est vérifiée, en mettant en oeuvre la clé jetable générée au cours de l'opération 502 et le condensât.

On observe qu'à la fin de l'opération 506, une copie des données à transmettre à été faite depuis le poste utilisateur 400 dans l'application Internet 410 et que cette copie est certifiée conforme à l'original grâce à la mise en oeuvre d'une clé jetable. Pour éviter que le certificat jetable soit réutilisé, au cours de l'opération 510, le certificat jetable est révoqué, c'est-à-dire qu'il devient inutilisable pour certifier des données.

En variante, le certificat jetable généré au cours de l'opération 502 est un certificat à durée de vie très courte, préférentiellement inférieure à une heure. Dans cette variante, l'opération 510 n'est pas exécutée puisque, au delà de la durée de vie du certificat jetable, ce certificat n'est pas utilisable pour certifier des données.

Les opérations 507 et 508 correspondent à un exemple de signature pouvant être utilisé en combinaison avec les opérations 501 à 506 ci-dessus. Au cours de l'opération 507, un sceau secret est généré et transmis, par l'intermédiaire du deuxième réseau 440, au récepteur 450.

Dans des modes de réalisation exemplaires, l'adresse du récepteur 450 sur le deuxième réseau est déterminée en mettant en correspondance l'identifiant de l'utilisateur transmis au cours de l'opération 500 avec ladite adresse, dans une table de correspondance. Dans des modes de réalisation exemplaires, l'adresse du récepteur 450 est déchiffrée par le serveur 420 (voir figures 1 et 2). Préférentiellement, le sceau secret est calculé sur les éléments de signature du document. Préférentiellement, le sceau secret dépend des données à transmettre, de leur nombre, de leur contenu, de la date et de l'heure de la génération du sceau secret, de la clé privée de l'émetteur des données déterminée en correspondance avec l'identifiant de l'utilisateur transmis au cours de l'opération 501, de l'adresse internet ("adresse IP") du poste utilisateur 400 et/ou d'un numéro de la session Internet au cours de laquelle les données sont transmises. Selon un exemple de mise en oeuvre de l'opération 507, le sceau secret est obtenu par calcul d'un condensât des données à transmettre, par exemple sous la forme d'une séquence de vingt symboles, de chiffrement de ce condensât par la clé privée de l'utilisateur du poste utilisateur 400, et d'extraction d'une partie du résultat de ce chiffrement, par exemple huit symboles sur vingt.

Préférentiellement, au moins une coordonnée d'au moins un destinataire des données à transmettre est transmis avec le sceau secret, au cours de l'opération 507, de telle manière que l'utilisateur émetteur puisse identifier le message qu'il est en train de signer.

Le lecteur pourra se référer à la demande de brevet PCT/FR98/02348, incorporée ici par référence, pour mieux connaître des exemples d'étapes mises en oeuvre au cours des opérations 507 et 508. Au cours de l'opération 508, l'utilisateur commun du poste utilisateur 400 et du récepteur 450 saisie le sceau secret et ce sceau secret est transmis au serveur de sécurité 470 où le sceau est vérifié, opération 509.

En variante, les opérations 507 à 509 sont remplacées par une opération de signature basée sur l'utilisation d'une carte à mémoire ("carte à puce") ou d'une mesure de biométrie ou toute autre moyen réputé fiable d'authentification forte de l'utilisateur.

A la fin de l'opération 508, les données transmises sont donc certifiées intègres et signées par l'utilisateur qui les transmet. L'opération 509 consiste à substituer une signature dite PKI (pour Public Key Infrastructure, soit infrastructure de clés publiques) à la signature effectuée au cours des opérations 507 et 508.

Cette signature peut être soit la signature de l'utilisateur, si elle est connue du serveur de sécurité 420 ou transmise par le poste utilisateur 400, soit la signature du serveur de sécurité 420, soit la clé publique du tiers destinataire.

Au cours de l'opération 509, les données transmises sont signées avec la clé privée de l'utilisateur qui les a transmises (dit "signataire" des données).

L'utilisateur a ainsi accès à une ressource du premier réseau de communication, par exemple, la transmission de courrier électronique authentifiée, l'accès à des données ou le paiement de produits ou services

Enfin, au cours de l'opération 511, les données transmises, certifiées et signées par clé privée sont transmises à la mémoire de stockage 430 avec une date et, éventuellement, une heure de telle manière qu'elles sont horodatées, archivées et notarisée.

Dans une application de la présente invention à une remise en main propre des données transmises, un destinataire est, à la suite de l'opération 511, averti de la mise à sa disposition des données à transmettre et des opérations similaires aux opérations exposées ci-dessus sont mises en oeuvre pour effectuer une copie certifiée conforme sur le poste utilisateur du destinataire après avoir recueilli de sa part une signature. Par exemple, une signature telle qu'exposée dans la demande de brevet PCT/FR98/02348 avec copie certifiée conforme comme exposé ci-dessus, peut, de nouveau être mise en oeuvre pour authentifier le destinataire.

Dans des modes de réalisation exemplaires, par le biais du terminal à adresse unique, le client requiert d'un serveur, un numéro de carte de paiement à usage unique en fournissant un code secret, éventuellement sous la forme d'une clé PKI, et en indiquant, éventuellement, un identifiant du marchand placé, par exemple placé sur le site Internet du marchand, un montant maximal de paiement affecté à ce numéro de carte de paiement à usage unique et/ou un montant à payer au marchand et reçoit, en retour, sur le deuxième terminal, un numéro de carte de crédit à usage unique que la client utilise pour payer le marchand, de manière connue dans le commerce en ligne. A cet effet, le serveur détermine un numéro de carte de paiement à usage unique qu'il met en correspondance avec un moyen de paiement de l'utilisateur et lorsque le marchand demande le paiement, en transmettant le numéro de carte de paiement à usage unique, le serveur fait effectuer le paiement avec le moyen de paiement de l'utilisateur qui est en correspondance avec le numéro de carte de paiement à usage unique. Le client est ainsi assuré que le moyen de paiement n'est pas transmis en ligne et le marchand est assuré d'être payé parce que le client est authentifié.

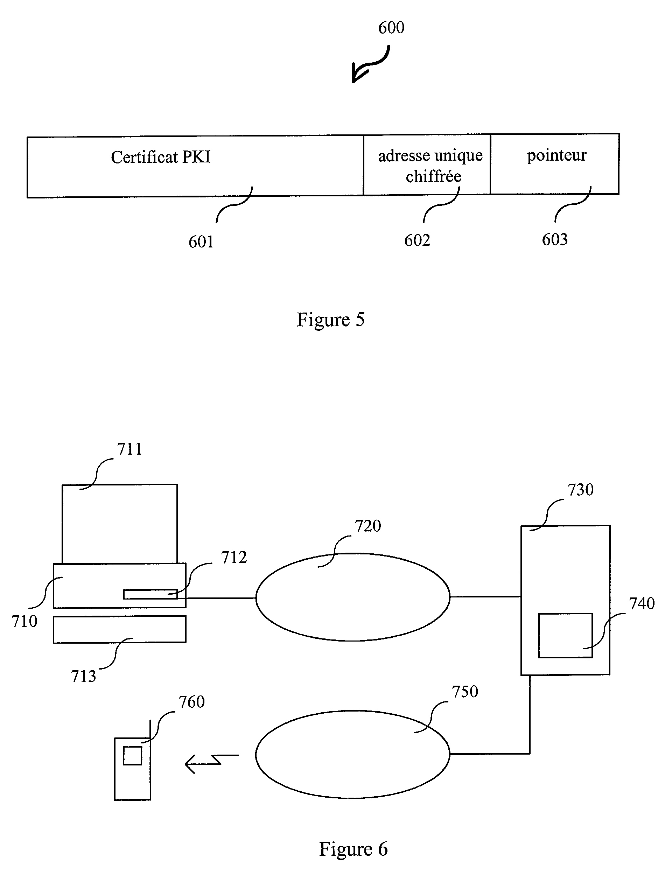

La figure 5 représente des champs de certificats conformes à l'infrastructure à clés publiques PKI, conformément à un aspect de la présente invention.

Le certificat 600 comporte :
- un certificat 601, conforme à l'infrastructure à clés publique PKI,
- un champ 602 comportant une adresse unique d'un terminal de télécommunication de l'utilisateur identifié par les certificats 600 et 601, de manière chiffrée, par exemple par la clé publique du serveur qui déclenche l'envoi d'une information non prédictible au client et qui vérifie, en retour, l'information non prédictible transmise par l'utilisateur, et
- dans des modes de réalisation exemplaires, un pointeur 603 qui identifie une base de données capable d'authentifier le certificat 601.

Le certificat 601, conforme à l'infrastructure à clés publique PKI, est, par exemple, généré à partir de données fournies par l'organisme de certification dont la base de données est identifiée par le pointeur 603. Il ne représente pas ladite adresse unique. Le pointeur 603 identifie la base de données capable d'authentifier le certificat 601 par une adresse Internet, par un nom de domaine ou par tout autre moyen permettant à un serveur demandant une vérification de l'identité de l'utilisateur d'obtenir cette vérification en mettant en oeuvre la base de données considérée.

La figure 5 représente aussi des champs d'une base de données mises en oeuvre dans des modes de réalisation exemplaires de la présente invention.

Dans la figure 6 sont représentés un premier terminal utilisateur 710, comportant un écran de visualisation 711, un modem 712 et un moyen de saisie de symboles 713, un réseau informatique 720, un serveur 730, une base de données 740, un réseau de télécommunication 750 et un deuxième terminal utilisateur 760.

Le premier terminal utilisateur 710 est, par exemple, un ordinateur personnel ou un assistant personnel, adapté à communiquer sur le réseau informatique 720, par l'intermédiaire du modem 712. L'écran de visualisation 711 est adapté à afficher des informations échangées sur le réseau informatique 720, par exemple des pages hypertexte et des courriers électroniques, par exemple grâce à un logiciel de navigation 714.

Le moyen de saisie de symboles 713 est adapté à permettre à l'utilisateur de saisir des symboles, par exemple des caractères alphanumériques. Il comporte, par exemple, un écran tactile et/ou un clavier. Le réseau informatique 720 est un réseau ouvert, par exemple Internet. Le serveur 730 assure :
- la communication, par l'intermédiaire du réseau informatique 720, avec le premier terminal utilisateur 710,
- la communication, par l'intermédiaire du réseau de télécommunication 750, avec le deuxième terminal utilisateur 760, et
- la gestion de la base de données 740.

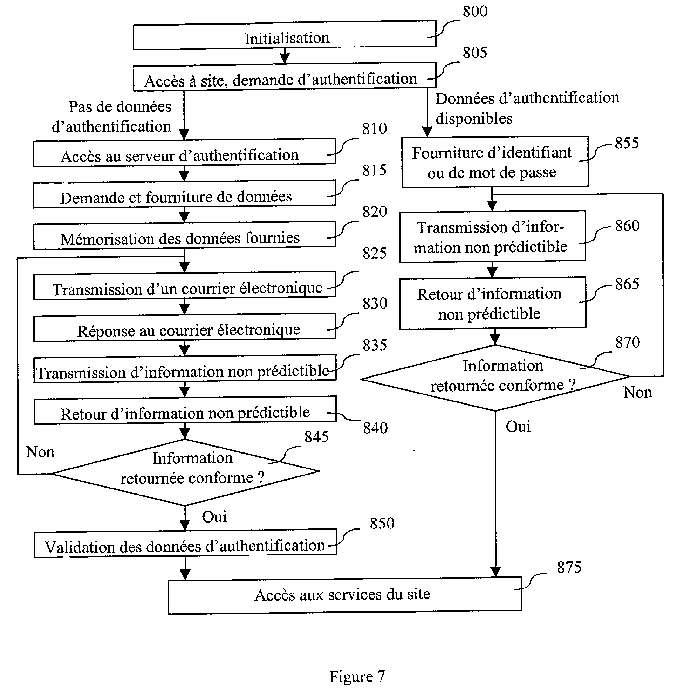

Grâce à des logiciels non représentés, le premier terminal utilisateur 710 et le serveur 730 sont adapté à mettre en oeuvre les opérations indiquées ci-dessous et, par exemple, les opérations illustrées en figures 7 à 9.

La base de données 740 est une base de données d'authentification et de traçabilité. Elle conserve des informations concernant chaque utilisateur authentifié, comportant au moins, une adresse électronique et une adresse sur le réseau de télécommunication 750. Le réseau de télécommunication 750 est un réseau dans lequel chaque utilisateur possède une adresse unique, c'est-à-dire qu'aucune adresse n'est attribuée à deux utilisateurs. Par exemple, le réseau de télécommunication 750 est un réseau de téléphonie, préférentiellement non filaire, ou un réseau de récepteurs alphanumériques mobiles, aussi appelés "pageurs" (en anglais "pager"). Le deuxième terminal utilisateur 760 est adapté à recevoir de l'information sur le réseau de télécommunication 750. Par exemple, le deuxième terminal utilisateur 760 est un téléphone, préférentiellement mobile.

Pour être référencé dans la base de données d'authentification 740, l'utilisateur met en oeuvre le premier terminal utilisateur 710 pour accéder à un site informatique, par exemple un site web hébergé par le serveur 730. A cet effet, soit il utilise une adresse dédiée au service d'authentification, soit il est invité, par exemple par un site marchand ou un site institutionnel, à s'inscrire à un service d'authentification hébergé par le serveur 730.

Le serveur 730 invite l'utilisateur à fournir des informations le concernant, y compris au moins une adresse de courrier électronique, une adresse unique du deuxième terminal utilisateur, préférentiellement au moins un nom, un prénom, une adresse postale et, éventuellement, des références bancaires, un numéro d'inscription à un service tiers, un numéro de compte, un numéro de cotisant, un numéro de déclarant, un numéro d'assuré et/ou un mot de passe statique. Eventuellement, l'utilisateur utilise un certificat électronique d'authentification de son premier terminal utilisateur 710, ledit certificat électronique pouvant être conforme à l'infrastructure à clés publiques PKI. Eventuellement, l'utilisateur fournit une clé publique concernant l'utilisateur déclaré, que l'utilisateur déclarant soit, ou non, l'utilisateur déclaré.

Chaque information saisie par l'utilisateur, par exemple par la mise en oeuvre d'un formulaire électronique, est mise en mémoire dans la base de données 740 et, préférentiellement cryptée. Dans le cas où un certificat électronique et/ou une clé publique a été utilisé, une information d'identification du tiers de confiance qui a émis ledit certificat électronique ou ladite clé publique est mémorisée dans la base de données.

Lorsque les informations suffisantes ont été fournies par l'utilisateur, le serveur 730 provoque la transmission, à l'adresse électronique de l'utilisateur, d'un message électronique, ou courriel, comportant une confirmation de l'identité de l'utilisateur et une invitation à répondre à ce message électronique, par exemple en cliquant sur un lien incorporé dans ledit message électronique.

Lorsque l'utilisateur destinataire du message électronique effectue cette réponse, il est informé, par exemple par l'intermédiaire d'une fenêtre ou d'une page hypertexte, qu'il va recevoir une information non prédictible sur le deuxième terminal utilisateur, par exemple sous la forme d'un message court (en anglais SMS pour "short message system" pour système de messages courts) et qu'il devra la saisir et la transmettre au serveur. Préférentiellement, la communication entre le premier terminal utilisateur 710 et le serveur 730 est alors cryptée, par exemple en mettant en oeuvre le protocole SSL. L'utilisateur est aussi informé qu'il ne dispose que d'une durée limitée pour saisir et transmettre l'information non prédictible au serveur 730.

Le serveur 730 détermine, par exemple par tirage aléatoire, une information non prédictible et la transmet au deuxième terminal utilisateur 760. Préférentiellement, l'information non prédictible est représentative d'au moins un identifiant de l'utilisateur, par exemple son adresse électronique et/ou l'adresse unique du deuxième terminal utilisateur 760. A réception de l'information non prédictible, l'utilisateur saisit avec le moyen de saisie de symboles 713, l'information non prédictible reçue sur le deuxième terminal utilisateur 760 et provoque sa transmission au serveur 730, par exemple, par la mise en oeuvre d'un simple bouton de confirmation ou de validation.

A réception de l'information non prédictible, par l'intermédiaire du réseau informatique, le serveur 730 vérifie que les deux conditions suivantes sont remplies :
- l'information non prédictible reçue par le serveur 730 en provenance du premier terminal utilisateur 710 est conforme à l'information non prédictible transmise au deuxième terminal utilisateur 760, et
- une durée prédéterminée (par exemple cinq minutes) ne s'est pas totalement écoulée entre la transmission et la réception de l'information non prédictible.

Si ces deux conditions sont remplies, l'utilisateur est considéré comme authentifié et il a accès aux services d'authentification, par exemple pour payer, passer une commande ou effectuer une déclaration sur un site Internet. Cette authentification prend la forme d'une mise en mémoire d'une information de confirmation dans la base de données 740, en regard des informations concernant l'utilisateur concerné.

Selon des variantes, au cas où un certificat électronique et/ou une clé publique a été mis en oeuvre par l'utilisateur déclarant, ce certificat et/ou cette clé est vérifié par le serveur, en invitant l'utilisateur déclaré à transmettre ledit certificat ou à utiliser sa clé privée.

On observe que l'authentification peut être effectuée intégralement par l'utilisateur, qui s'inscrit ainsi au service d'authentification par exemple pour émettre des messages ou courriers électroniques signés ou par deux utilisateurs, l'un, le déclarant, inscrivant l'autre, le déclaré, par exemple à l'occasion de l'envoi d'un courrier électronique et le déclaré recevant un courrier électronique lui annonçant qu'un courrier électronique signé lui a été envoyé et validant les données d'authentification en recevant puis saisissant l'information non prédictible, pour avoir accès au courrier signé qui lui est destiné. Dans ce second cas, la validation des données d'authentification vaut simultanément signature d'un accusé de réception du courrier électronique signé par le déclaré, le serveur pouvant alors transmettre à l'émetteur du courrier électronique signé, le déclarant, un avis de réception signé sous la forme d'un courrier électronique.

Ainsi, le serveur 730 est adapté à effectuer un référencement d'utilisateur dans une base de données d'authentification, et comporte :
- un moyen de réception (par exemple un modem non représenté connecté à Internet), de la part d'un premier utilisateur, d'une adresse électronique d'un deuxième l'utilisateur pouvant être identique au premier utilisateur, et de mémorisation de ladite adresse électronique dans la base de données,
- un moyen de réception (par exemple le modem), de la part du premier utilisateur, d'une adresse "unique" dudit deuxième utilisateur sur un réseau de communication à adresses uniques, et de mémorisation de ladite adresse unique,
- un moyen de transmission (par exemple le modem), à l'adresse électronique du deuxième l'utilisateur, d'un message invitant le deuxième utilisateur à y répondre,
- un moyen de transmission adapté (par exemple par envoi d'un message SMS), lorsque le deuxième utilisateur répond audit message électronique, à transmettre, à ladite adresse unique, une information non prédictible,
- un moyen de réception (par exemple le modem), de la part du deuxième utilisateur, de ladite information non prédictible,
- un moyen de vérification (par exemple son processeur doté d'un logiciel adapté) de correspondance de ladite information non prédictible transmise à l'adresse unique et de ladite information non prédictible transmise par ledit deuxième utilisateur et
- un moyen de mémorisation (la base de données 740) de l'adresse unique du deuxième utilisateur, de l'adresse électronique du deuxième utilisateur et de la vérification de correspondance entre l'adresse électronique et l'adresse unique du deuxième utilisateur.

Ainsi, le procédé mis en oeuvre conjointement par le serveur 730 et le premier terminal utilisateur 710 comporte :
- une étape de fourniture, par un premier utilisateur, d'une adresse électronique d'un deuxième l'utilisateur pouvant être identique au premier utilisateur, et de mémorisation de ladite adresse électronique dans la base de données,
- une étape de fourniture d'une adresse "unique" dudit deuxième utilisateur sur un réseau de communication à adresses uniques, et de mémorisation de ladite adresse unique
- une étape de transmission, par un serveur, à l'adresse électronique du deuxième l'utilisateur, d'un message invitant le deuxième utilisateur à y répondre,
- lorsque le deuxième utilisateur répond audit message électronique, une étape de transmission, par ledit serveur, à ladite adresse unique, d'une information non prédictible,
- une étape de transmission, par ledit deuxième utilisateur, audit serveur, de ladite information non prédictible,
- une étape de vérification de correspondance de ladite information non prédictible transmise par ledit serveur et de ladite information non prédictible transmise par ledit deuxième utilisateur et
- si la vérification de correspondance est positive, une étape de mémorisation, associée à l'adresse unique du deuxième utilisateur, de l'adresse électronique du deuxième utilisateur d'une indication de vérification de correspondance entre l'adresse électronique et l'adresse unique du deuxième utilisateur.

On observe, en figure 7, une étape d'initialisation 800, au cours de laquelle des serveurs et un premier terminal utilisateur sont initialisés pour mettre en oeuvre les étapes illustrées en figure 7.

Ensuite, au cours d'une étape 805, l'utilisateur du premier terminal accède à un site Internet qui l'invite à fournir des données d'authentification ou, si l'utilisateur n'en dispose pas, à s'inscrire à un service d'authentification.

Si l'utilisateur ne dispose pas de données d'authentification, au cours d'une étape 810, le premier terminal utilisateur est mis en relation directe avec un serveur d'authentification, en mode de communication sécurisé, par exemple selon le protocole https ou SSL. Puis, au cours d'une étape 815, le serveur d'authentification demande à l'utilisateur de fournir des données, comportant au moins une adresse électronique et une adresse unique d'un deuxième terminal utilisateur sur un réseau de télécommunication dans lequel chaque utilisateur dispose d'une adresse différente de celle de tous les autres utilisateurs.

Préférentiellement, l'utilisateur fournit aussi au moins un nom, un prénom, une adresse postale et, éventuellement, des références bancaires, un numéro d'inscription à un service tiers, un numéro de compte, un numéro de cotisant, un numéro de déclarant, un numéro d'assuré et/ou un mot de passe statique pour l'utilisation du service d'authentification.

Ensuite, au cours d'une étape 820, le serveur enregistre dans une base de données, les informations fournies par l'utilisateur.

Puis, au cours d'une étape 825, le serveur transmet à l'adresse électronique fournie par l'utilisateur un courrier électronique l'invitant à répondre, par exemple, en cliquant sur un lien inséré dans ledit courrier électronique ou en accédant à une adresse Internet dédiée à son authentification (une adresse Internet est alors crée spécifiquement pour l'utilisateur, par exemple, www.magicaxess.com/jamesstewart9543987 dans laquelle james stewart sont les prénom et nom de l'utilisateur et 9543987 est une partie d'adresse non prédictible par l'utilisateur).

Lorsque l'utilisateur répond au courrier électronique, au cours d'une étape 830, le premier terminal utilisateur est en communication, préférentiellement sécurisée, avec le serveur d'authentification. Le serveur d'authentification informe alors l'utilisateur qu'il va recevoir une information non prédictible sur le deuxième terminal utilisateur et que celui-ci doit donc être en état de recevoir cette information. Le serveur d'authentification indique aussi à l'utilisateur qu'il devra retransmettre, dans une durée prédéterminée, par exemple pendant les cinq minutes suivant la réception de l'information non prédictible, par l'intermédiaire du premier terminal utilisateur, l'information non prédictible reçue sur le deuxième terminal utilisateur.

Au cours d'une étape 835, le serveur d'authentification fait transmettre à l'adresse unique du deuxième terminal utilisateur, une information non prédictible, par exemple tirée au hasard ou provenant d'un condensât d'informations qu'il a transmises et/ou d'une heure de transmission de l'information non prédictible.

Au cours d'une étape 840, l'utilisateur transmet l'information non prédictible au serveur d'authentification, par l'intermédiaire du premier terminal utilisateur.

Au cours d'une étape 845, le serveur d'authentification vérifie que l'information transmise par le premier terminal utilisateur correspond à l'information transmise au deuxième terminal utilisateur et que la durée prédéterminée ne s'est pas achevée avant la réception de l'information non prédictible en provenance du premier terminal utilisateur.

Si les informations correspondent, au cours d'une étape 850, le serveur d'authentification valide les données d'authentification, en mémorisant, dans la base de données, de manière associée à l'adresse unique du deuxième utilisateur, à l'adresse électronique du deuxième utilisateur, une indication de vérification de correspondance entre l'adresse électronique et l'adresse unique du deuxième utilisateur.

Si un mot de passe et/ou un identifiant de l'utilisateur ont été déterminés, ledit identifiant ou ledit mot de passe sont aussi mémorisés en association avec l'adresse électronique et l'adresse unique du deuxième utilisateur.

Préférentiellement, la vérification de correspondance est horodatée et la date et l'heure de la vérification est aussi mémorisé en association avec l'adresse unique et l'adresse électronique du deuxième utilisateur.

En cas de vérification positive, le serveur d'authentification donne à l'utilisateur accès à des services, comme, par exemple, l'envoi de courriers électroniques signés ou l'accès à des informations disponibles sur des sites Internet qui requièrent l'authentification de leurs utilisateur, par exemple sites bancaires, sites fiscaux, sites médicaux, sites de services sociaux, sites payants en fonction de la durée de connexion, sites pour adultes, ... Préférentiellement, au cours d'au moins une des étapes 815 ou 830 à 850, un mot de passe statique et/ou un identifiant de l'utilisateur sont déterminés et l'utilisateur est invité à les conserver.

Si les informations ne correspondent pas, l'étape 825 est réitérée, sachant que pas plus de trois itérations d'échec de validation de données d'authentification ne sont permises, les données d'authentification étant détruites après lesdits trois échecs.

Si, à la suite de l'étape 805, l'utilisateur indique qu'il dispose de données d'authentifications, au cours d'une étape 855, l'utilisateur fournit un identifiant et/ou un mot de passe statique.

Si l'identifiant et/ou le mot de passe statique est valide, le serveur fait transmettre au deuxième terminal utilisateur lui correspondant, une information non prédictible, différente de toutes les informations non prédictibles précédemment utilisées avec ledit utilisateur et l'utilisateur est invité à recevoir l'information non prédictible et à la retransmettre, par l'intermédiaire du premier terminal utilisateur, au serveur d'authentification, éventuellement par l'intermédiaire du site sur lequel l'utilisateur se trouve, étape 860.

Au cours d'une étape 865 l'utilisateur reçoit et fait retransmettre, par l'intermédiaire du premier terminal utilisateur, ladite information non prédictible.

Au cours d'une étape 870, le serveur d'authentification vérifie la correspondance entre l'information non prédictible qu'il a fait transmettre au deuxième terminal utilisateur et celle qu'il a reçue du premier terminal utilisateur.

En cas de correspondance, au cours d'une étape 875, les services du site sur lequel se trouve l'utilisateur lui sont rendus accessibles. A défaut, ces services ne sont pas accessibles et les étapes 855 à 870 sont réitérées. On observe que les étapes 805 à 820 illustrées ci-dessus peuvent être assistées par un vendeur.

Préférentiellement, la vérification de correspondance est horodatée et la date et l'heure de la vérification est aussi mémorisé en association avec l'adresse unique et l'adresse électronique du deuxième utilisateur.

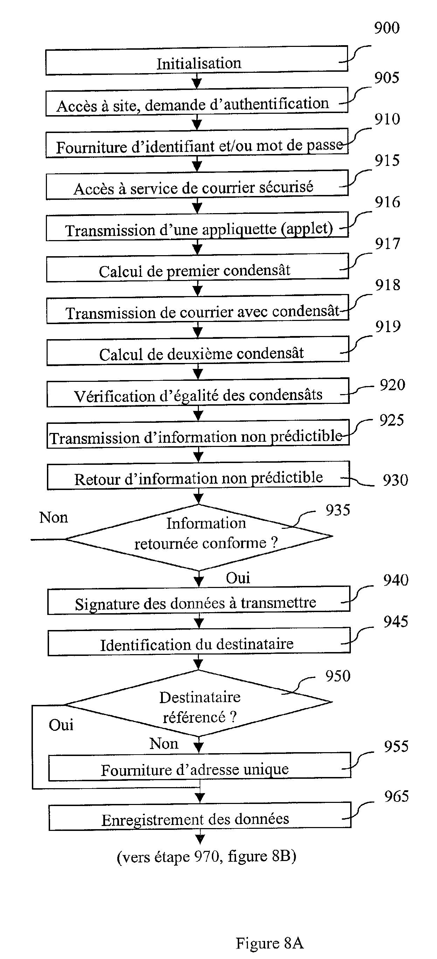

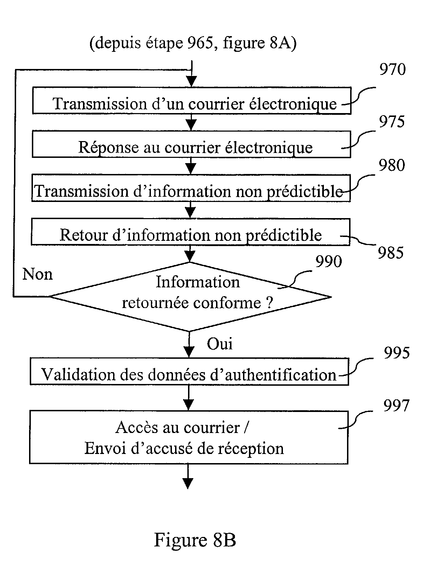

On observe, en figure 8, une étape d'initialisation 900, au cours de laquelle des serveurs et un premier terminal utilisateur d'un utilisateur dit "émetteur" ou "déclarant" sont initialisés pour mettre en oeuvre les étapes illustrées en figure 8.

Ensuite, au cours d'une étape 905, l'utilisateur "émetteur" accède, par l'intermédiaire du premier terminal, à un site de transmission de courriers signés avec accusés de réception porté par le serveur d'authentification. On suppose que l'utilisateur "émetteur" est déjà authentifié dans la base de données du serveur d'authentification, soit pour avoir suivi la procédure d'authentification illustrée en figure 7, soit pour avoir reçu un courrier recommandé avec accusé de réception comme illustré, ci-dessous, en figure 8.

Au cours d'une étape 910, l'utilisateur fournit un identifiant et/ou un mot de passe statique. Si l'identifiant et/ou le mot de passe statique est valide, l'utilisateur accède à un service de rédaction de courrier électronique bien connu de l'homme du métier, au cours d'une étape 915. L'utilisateur rédige alors son courrier et peut y joindre des pièces attachées, par exemple des fichiers conservés par le premier terminal utilisateur. A cet effet, le serveur met, par exemple, en oeuvre au moins l'un des procédés décrits dans les documents FR 00 13101 ou FR 00 15215, qui sont incorporés ici par référence. En particulier, une appliquette (en anglais "applet") est transmise au premier terminal utilisateur, étape 916, si celui-ci ne l'a pas déjà reçue. Puis un certificat électronique à usage unique, par exemple conforme à l'infrastructure à clés publiques PKI, et un algorithme de hashage sont mis en oeuvre pour fournir un condensât (en anglais "hash") des pièces attachées à transmettre et/ou du courrier électronique, étape 917. Ce condensât est transmis au serveur d'authentification avec le courrier et les éventuelles pièces attachées, étape 918, qui calcule, avec le même algorithme de hashage et le même certificat électronique à usage unique, étape 919, pour vérifier que les données qu'il a reçues sont exactement identiques aux données transmises par le premier terminal utilisateur, étape 920.

Le serveur d'authentification fait transmettre au deuxième terminal utilisateur correspondant à l'utilisateur "émetteur", dans la base de données, une information non prédictible, différente de toutes les informations non prédictibles précédemment utilisées avec ledit utilisateur, étape 925, l'utilisateur étant invité à recevoir l'information non prédictible et à la retransmettre, par l'intermédiaire du premier terminal utilisateur, au serveur d'authentification.

Au cours d'une étape 930, l'utilisateur reçoit sur le deuxième terminal utilisateur et fait retransmettre, par l'intermédiaire du premier terminal utilisateur, ladite information non prédictible.

Au cours d'une étape 935, le serveur d'authentification vérifie la correspondance entre l'information non prédictible qu'il a fait transmettre au deuxième terminal utilisateur et celle qu'il a reçue du premier terminal utilisateur. Au cas où les informations non prédictibles ne correspondent pas, le processus est arrêté et l'utilisateur doit renouveler sa tentative d'authentification.

En cas de correspondance, au cours d'une étape 940, le serveur d'authentification signe les données à transmettre, par exemple avec la clé privée de l'utilisateur "émetteur" ou avec la clé privée du service de transmission de courriers signés avec accusé de réception.

Au cours d'une étape 945, l'utilisateur "émetteur" est invité à fournir et fournit l'adresse électronique de l'utilisateur "destinataire" ou tout autre identifiant permettant de déterminer cette adresse électronique (nom, prénom, société, par exemple).

Au cours d'une étape 950, le serveur détermine si l'utilisateur destinataire est référencé dans la base de données. Si oui, l'utilisateur émetteur peut immédiatement valider l'envoi du courrier électronique. Si non, au cours d'une étape 955, l'utilisateur "émetteur" est invité à fournir et fournit une adresse unique d'un quatrième terminal utilisateur, sur un réseau de télécommunication dans lequel chaque terminal dispose d'une adresse différente de tous les autres terminaux, par exemple un réseau téléphonique, par exemple sans fil. Préférentiellement, l'utilisateur émetteur fournit aussi un nom, un prénom et une adresse postale de l'utilisateur destinataire.

Ensuite, au cours d'une étape 965, le serveur enregistre dans une base de données, les informations fournies par l'utilisateur émetteur.

Puis, au cours d'une étape 970 (figure 8B), le serveur transmet à l'adresse électronique fournie par l'utilisateur émetteur un courrier électronique indiquant à l'utilisateur destinataire qu'un courrier électronique signé lui est destiné et l'invitant à répondre, par exemple, en cliquant sur un lien inséré dans ledit courrier électronique ou en accédant à une adresse Internet dédiée à son authentification.

Lorsque l'utilisateur destinataire répond au courrier électronique, au cours d'une étape 975, le troisième terminal utilisateur, par exemple de type ordinateur personnel ou assistant personnel, est en communication, préférentiellement sécurisée, avec le serveur d'authentification. Le serveur d'authentification informe alors l'utilisateur destinataire qu'il va recevoir une information non prédictible sur le quatrième terminal utilisateur et que celui-ci doit donc être en état de recevoir cette information. Le serveur d'authentification indique aussi à l'utilisateur destinataire qu'il devra retransmettre, dans une durée prédéterminée, par exemple pendant les cinq minutes suivant la réception de l'information non prédictible, par l'intermédiaire du troisième terminal utilisateur, l'information non prédictible reçue sur le quatrième terminal utilisateur.

Au cours d'une étape 980, le serveur d'authentification fait transmettre à l'adresse unique du quatrième terminal utilisateur, une information non prédictible, par exemple tirée au hasard ou provenant d'un condensât d'informations qui le concernent dans la base de données et/ou du courrier électronique qui lui est destiné et/ou d'une heure de transmission de l'information non prédictible.

Au cours d'une étape 985, l'utilisateur destinataire transmet l'information non prédictible au serveur d'authentification, par l'intermédiaire du troisième terminal utilisateur.

Au cours d'une étape 990, le serveur d'authentification vérifie que l'information transmise par le troisième terminal utilisateur correspond à l'information transmise au quatrième terminal utilisateur et que la durée prédéterminée ne s'est pas achevée avant la réception de l'information non prédictible en provenance du troisième terminal utilisateur.

Si les informations correspondent, au cours d'une étape 995, le serveur d'authentification valide les données d'authentification, en mémorisant, dans la base de données, de manière associée à l'adresse unique du deuxième utilisateur, à l'adresse électronique du deuxième utilisateur, une indication de vérification de correspondance entre l'adresse électronique et l'adresse unique du deuxième utilisateur.

Si un mot de passe et/ou un identifiant de l'utilisateur ont été déterminés, ledit identifiant ou ledit mot de passe sont aussi mémorisés en association avec l'adresse électronique et l'adresse unique du deuxième utilisateur.

Préférentiellement, la vérification de correspondance est horodatée et la date et l'heure de la vérification est aussi mémorisé en association avec l'adresse unique et l'adresse électronique du deuxième utilisateur.

Le serveur donne alors à l'utilisateur destinataire accès à la réception du courrier électronique signé émis par l'utilisateur émetteur. La réception des données par le deuxième utilisateur (destinataire) s'effectue, préférentiellement, comme la transmission de ces données par le premier utilisateur (émetteur), avec détermination d'un condensât, transmission d'une appliquette et vérification du condensât, comme indiqué aux étapes 916 à 920, ci-dessus. Ainsi, l'intégrité des données transmises est garantie.

Dès cet accès, le serveur d'authentification retourne un message d'accusé de réception au destinataire émetteur, avec ou sans authentification de l'utilisateur émetteur, étape 997. Préférentiellement, au cours d'au moins une des étapes 970 à 997, un mot de passe statique et/ou un identifiant de l'utilisateur destinataire sont déterminés et l'utilisateur destinataire est invité à les conserver.

Si les informations ne correspondent pas, l'étape 970 est réitérée, sachant que pas plus de trois itérations d'échec de validation de données d'authentification ne sont permises, les données d'authentification étant détruites après lesdits trois échecs.

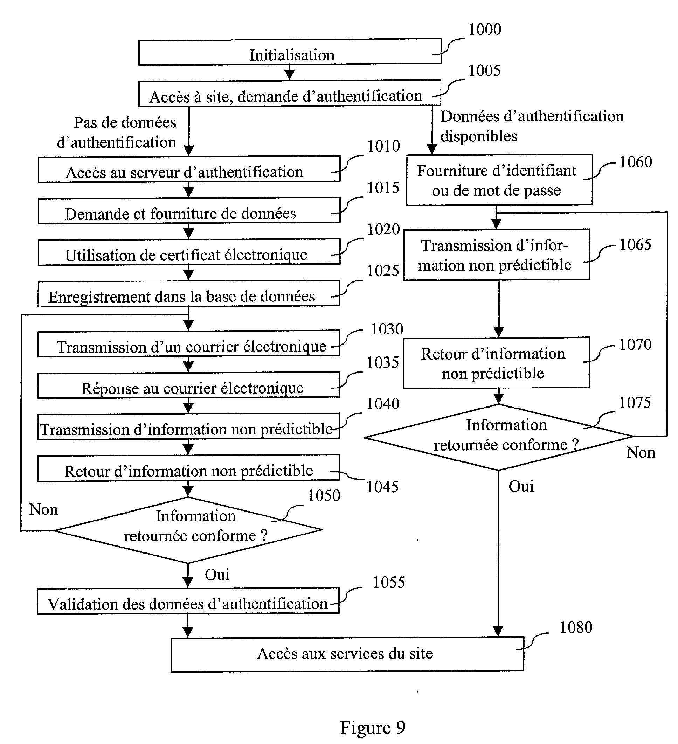

On observe, en figure 9, une étape d'initialisation 1000, au cours de laquelle des serveurs et un premier terminal utilisateur sont initialisés pour mettre en oeuvre les étapes illustrées en figure 9.

Ensuite, au cours d'une étape 1005, l'utilisateur du premier terminal accède à un site Internet qui l'invite à fournir des données d'authentification ou, si l'utilisateur n'en dispose pas, à s'inscrire à un service d'authentification.

Si l'utilisateur ne dispose pas de données d'authentification, au cours d'une étape 1010, le premier terminal utilisateur est mis en relation directe avec un serveur d'authentification, en mode de communication sécurisé, par exemple selon le protocole https ou SSL. Puis, au cours d'une étape 1015, le serveur d'authentification demande à l'utilisateur de fournir des données, comportant au moins une adresse électronique et une adresse unique d'un deuxième terminal utilisateur sur un réseau de télécommunication dans lequel chaque utilisateur dispose d'une adresse différente de celle de tous les autres utilisateurs.

Préférentiellement, l'utilisateur fournit aussi au moins un nom, un prénom, une adresse postale et un numéro de carte bancaire, pour acheter des timbres, chaque timbre étant ensuite "dépensé" lors de chaque authentification de l'utilisateur, et/ou un mot de passe statique pour l'utilisation du service d'authentification.

On suppose ici que l'utilisateur dispose d'un certificat électronique, par exemple délivré par la société américaine Verisign (marque déposée), ce certificat authentifiant le premier terminal utilisateur. Au cours d'une étape 1020, l'utilisateur utilise ce certificat électronique pour certifier les données qu'il a fournies par l'intermédiaire du premier terminal utilisateur.

Ensuite, au cours d'une étape 1025, le serveur enregistre dans une base de données, les informations fournies par l'utilisateur. On observe que, selon ce mode de réalisation, la base de données conserve une combinaison d'information permettant une authentification forte de l'utilisateur et le paiement sécurisé :
- l'adresse unique du deuxième terminal,
- l'adresse de courrier électronique,
- une indication de tiers de confiance pouvant certifier le certificat électronique et une indication de la mise en oeuvre de ce certificat électronique, et
- un numéro de carte bancaire.

Les étapes 1030 à 1080 correspondent respectivement aux étapes 825 à 875. En variante, lors de l'étape 1045, correspondant à l'étape 840, le premier terminal utilisateur met en oeuvre le certificat électronique pour certifier la transmission de l'information non prédictible. Ainsi, le lien juridique entre les données d'authentification, de certification et de paiement conservées dans la base de données, est renforcé.

On observe que les données ainsi conservées dans la base de données permettent d'attribuer une signature électronique de l'utilisateur, par exemple en conformité avec l'infrastructure à clés publiques PKI, la clé privée de l'utilisateur ne quittant pas le serveur d'authentification et donnant à l'utilisateur une liberté de changer de premier terminal utilisateur que les certificats de types connus ne permettent pas aisément. Cette clé peut "comporter" une clé privée de l'utilisateur pour la mise en oeuvre du certificat électronique, c'est-à-dire la représenter de manière univoque, et permettre une authentification de l'utilisateur émetteur en insérant, dans la clé conservée par le serveur d'authentification, un pointeur pointant vers un serveur du tiers de confiance qui à émis le certificat électronique et qui connaît donc les données personnelles de l'utilisateur et peut les certifier.

Selon des variantes, la clé privée générée par le serveur d'authentification représente l'adresse unique du deuxième terminal utilisateur, cette adresse étant chiffrées, par exemple par la clé publique du serveur d'authentification. Ainsi, à chaque fois que cette clé privée est utilisée, un serveur recevant un document signé avec cette clé privée peut interroger le serveur d'authentification et celui-ci peut transmettre, recevoir et vérifier une information non prédictible transitant par le deuxième terminal utilisateur puis par le premier terminal utilisateur et, éventuellement par le serveur demandant l'authentification, comme illustré dans les figures 6 à 9.

Selon des variantes, l'utilisateur peut mettre en place un lien informatique entre le premier et le deuxième terminal utilisateur pour que la réception et la retransmission de l'information non prédictible soit automatique.

Selon des variantes, seul le condensât des données est transmis par le premier utilisateur au serveur, un certificat d'intégrité étant ajouté ou combiné, par le serveur, au condensât et l'utilisateur transmettant les données, éventuellement signées et/ou encryptées (par le certificat d'intégrité et/ou par le condensât) par un moyen non représenté, par exemple en attachement à un courrier électronique, le certificat d'intégrité permettant au destinataire d'accéder aux données et/ou de vérifier l'intégrité des données.

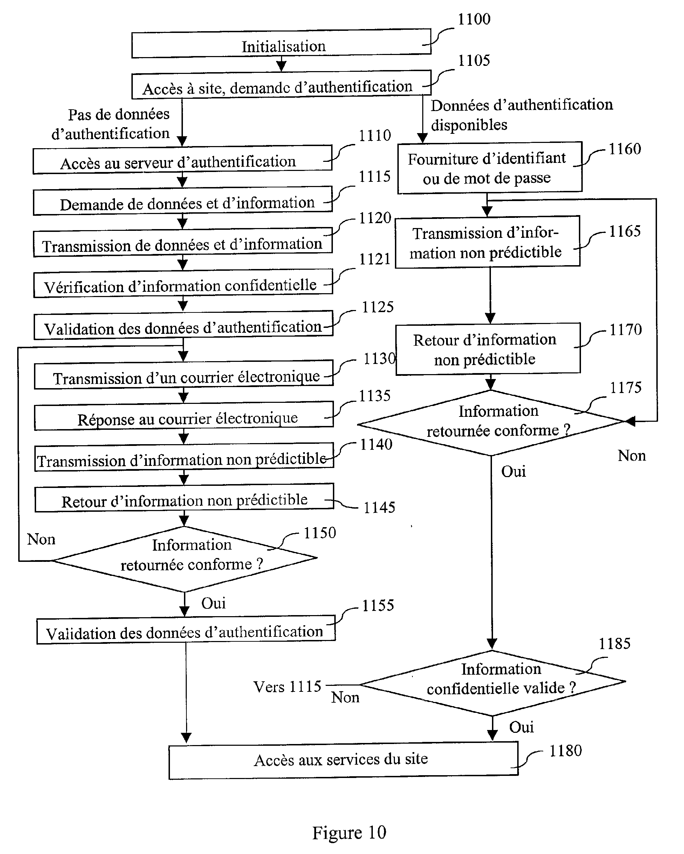

On observe, en figure 10, une étape d'initialisation 1100, au cours de laquelle des serveurs et un premier terminal utilisateur sont initialisés pour mettre en oeuvre les étapes illustrées en figure 10.

Ensuite, au cours d'une étape 1105, l'utilisateur du premier terminal accède à un site Internet qui l'invite à fournir des données d'authentification ou, si l'utilisateur n'en dispose pas, à s'inscrire à un service d'authentification. Par exemple, le site Internet est un site marchand, un site bancaire, un site administratif (sécurité sociale, caisse de retraite, ...), un site d'information payante (lettres d'information en ligne), un site de services personnels (assurance) ou un site de transmission d'e-mail recommandé.

On suppose d'abord que l'utilisateur ne dispose pas de données d'authentification. Au cours d'une étape 1110, le premier terminal utilisateur est mis en relation directe avec un serveur d'authentification, en mode de communication sécurisé, par exemple selon le protocole https ou SSL. Puis, au cours d'une étape 1115, le serveur d'authentification demande à l'utilisateur de fournir des données d'identification, comportant au moins une adresse électronique et de l'information confidentielle.

Préférentiellement, l'utilisateur fournit, à titre dc données d'identification, aussi au moins un nom, un prénom, une adresse postale et/ou un mot de passe statique choisi par l'utilisateur ou par le serveur d'authentification.

Au cours d'une étape 1120, l'utilisateur fournit des informations confidentielles, c'est-à-dire qui ne sont pas accessibles au grand public mais disponibles dans une base de données d'un tiers. Ces informations confidentielles comportent, par exemple un numéro de carte bancaire, un relevé d'identité bancaire, un numéro d'adhérent, un numéro d'affilié, ...

Au cours d'une étape 1121, les informations d'identification et les informations confidentielles sont fournies à un serveur tiers distant pour vérification (par exemple un serveur de banque vérifie le relevé d'identité bancaire ou le numéro de carte bancaire, un serveur d'assurance vérifie le numéro d'adhérent, un serveur de service social vérifie un numéro de cotisant, un serveur de service par abonnement vérifie un numéro d'abonnement ...).

Si la correspondance des informations est confirmée, l'étape 1125 est réalisée. Sinon, un message d'erreur est transmis à l'utilisateur, par exemple par e-mail et/ou sur la page du site d'authentification que visualise l'utilisateur, au cours d'une étape 1122.

Ensuite, au cours d'une étape 1125, le serveur d'authentification et/ou le serveur tiers, enregistre dans une base de données, les informations fournies par l'utilisateur.

Les étapes 1130 à 1180 correspondent respectivement aux étapes 825 à 875.

On observe que, soit au cours de l'étape 1115, soit au cours de l'étape 1135, l'utilisateur est invité à fournir une adresse unique d'un deuxième terminal utilisateur sur un réseau de télécommunication dans lequel chaque utilisateur dispose d'une adresse différente de celle de tous les autres utilisateurs.

On observe que, selon ce mode de réalisation, la base de données conserve une combinaison d'information permettant une authentification forte de l'utilisateur et le paiement sécurisé :
- l'adresse unique du deuxième terminal,
- l'adresse de courrier électronique,
- une indication de tiers de confiance pouvant confirmer les informations confidentielles, et
- au moins une informations confidentielle (numéro de carte bancaire, relevé d'identité bancaire, numéro de cotisant ou d'adhérent ...).

On observe que les données ainsi conservées dans la base de données permettent d'attribuer une signature électronique de l'utilisateur, par exemple en conformité avec l'infrastructure à clés publiques PKI, la clé privée de l'utilisateur ne quittant pas le serveur d'authentification et donnant à l'utilisateur une liberté de changer de premier terminal utilisateur, ce que les certificats de types connus ne permettent pas aisément. Cette clé peut "comporter" une clé privée de l'utilisateur pour la mise en oeuvre du certificat électronique, c'est-à-dire la représenter de manière univoque, et permettre une authentification de l'utilisateur émetteur en insérant, dans la clé conservée par le serveur d'authentification, un pointeur pointant vers un serveur du tiers de confiance qui à émis le certificat électronique et qui connaît donc les données personnelles et confidentielles de l'utilisateur et peut les certifier.

Selon des variantes, la clé privée générée par le serveur d'authentification représente l'adresse unique du deuxième terminal utilisateur, cette adresse étant chiffrées, par exemple par la clé publique du serveur d'authentification. Ainsi, à chaque fois que cette clé privée est utilisée, un serveur recevant un document signé avec cette clé privée peut interroger le serveur d'authentification et celui-ci peut transmettre, recevoir et vérifier une information non prédictible transitant par le deuxième terminal utilisateur puis par le premier terminal utilisateur et, éventuellement par le serveur demandant l'authentification, comme illustré dans les figures 6 à 10.

Selon des variantes, l'utilisateur peut mettre en place un lien informatique entre le premier et le deuxième terminal utilisateur pour que la réception et la retransmission de l'information non prédictible soit automatique.

En variante, l'utilisateur dispose d'un certificat électronique, par exemple délivré par la société américaine Verisign, ce certificat authentifiant le premier terminal utilisateur. Au cours d'une étape 1122 (non représentée), l'utilisateur utilise ce certificat électronique pour certifier les données qu'il a fournies par l'intermédiaire du premier terminal utilisateur.

En variante, lors de l'étape 1145, correspondant à l'étape 840, le premier terminal utilisateur met en oeuvre le certificat électronique pour certifier la transmission de l'information non prédictible. Ainsi, le lien juridique entre les données d'authentification, de certification et de paiement conservées dans la base de données, est renforcé.

Selon des variantes, seul le condensât des données est transmis par le premier utilisateur au serveur, un certificat d'intégrité étant ajouté ou combiné, par le serveur, au condensât et l'utilisateur transmettant les données, éventuellement signées et/ou encryptées (par le certificat d'intégrité et/ou par le condensât) par un moyen non représenté, par exemple en attachement à un courrier électronique, le certificat d'intégrité permettant au destinataire d'accéder aux données et/ou de vérifier l'intégrité des données.

Lorsque, au cours d'une autre session, l'utilisateur accède à un site affilié au service d'authentification que le procédé de l'invention permet de mettre en oeuvre, par exemple sur un site marchand, les étapes 1160 à 1175 sont effectuées. Lorsque le résultat de l'étape 1175 est positif, au cours d'une étape 1185, la validité de l'information confidentielle est, de nouveau vérifiée, comme au cours de l'étape 1121. Si l'information confidentielle n'est plus valide, les étapes 1115 à 1135 et 1155 sont réitérées. Si l'information confidentielle est encore valide, l'étape 1180 est effectuée.

En variante, l'information non prédictible est un moyen de paiement à usage unique, par exemple un numéro de carte de crédit virtuel.

## Revendications

1. Procédé de certification, **caractérisé en ce qu'**il comporte :
- une opération d'identification d'un utilisateur (155, 255, 500) au cours de laquelle ledit utilisateur transmet à un serveur, par l'intermédiaire d'un premier terminal (100, 200, 400) sur un premier réseau de communication (110, 210), un certificat (600) représentant, de manière chiffrée, une adresse unique d'un deuxième terminal (140, 240, 450) dudit utilisateur sur un deuxième réseau de communication (130, 230, 440),
- une opération de déchiffrement de ladite adresse unique par ledit serveur (157, 257, 507), et
- une opération de communication entre ledit serveur et le deuxième terminal (161, 261, 507).

2. Procédé de certification selon la revendication 1, **caractérisé en ce qu'**il comporte, en outre :
- une opération de transmission d'une information non prédictible, par ledit serveur, au deuxième terminal (161, 261, 507),
- une opération de transmission audit serveur par l'intermédiaire du premier terminal de ladite information non prédictible (163, 263, 508),
- une opération de vérification de ladite information non prédictible par ledit serveur (165, 267, 508) et
- si la vérification est positive, une opération d'autorisation d'accès du premier terminal à une ressource du premier réseau de communication (167, 269, 509).

3. Procédé de certification selon l'une quelconque des revendications 1 ou 2, **caractérisé en ce que**, au cours de l'opération d'identification (155, 255, 500) ledit utilisateur transmet un certificat (600) représentant, chiffré avec une clé publique, l'adresse unique du deuxième terminal.

4. Procédé de certification selon l'une quelconque des revendications 1 à 3, **caractérisé en ce que**, au cours de l'opération d'identification (155, 255, 500), le certificat (600) comporte un moyen d'obtention (602) d'une adresse unique du deuxième terminal utilisateur et un pointeur (603) identifiant une autre base de données comportant de l'information de signature électronique.

5. Procédé de certification selon l'une quelconque des revendications 1 à 4, **caractérisé en ce que**, au cours de l'opération d'identification, le certificat comporte un certificat (600) conforme à l'infrastructure à clés publiques PKI.

6. Dispositif de certification, **caractérisé en ce qu'**il comporte :
- un moyen d'identification d'un utilisateur (100, 200, 400) adapté à transmettre à un serveur (120, 220, 470), par l'intermédiaire d'un premier terminal sur un premier réseau de communication, un certificat (600) représentant, de manière chiffrée, une adresse unique d'un deuxième terminal (140, 240, 450) dudit utilisateur sur un deuxième réseau de communication (130, 230, 440),
- un moyen de déchiffrement de ladite adresse unique par ledit serveur (120, 220, 470), et
- un moyen de communication (130, 230, 440) entre ledit serveur et le deuxième terminal.

7. Dispositif de certification selon la revendication 6, **caractérisé en ce qu'**il comporte, en outre :
- un moyen de transmission (120, 220, 470) d'une information non prédictible, par ledit serveur, au deuxième terminal,
- un moyen de transmission (100, 200, 400) audit serveur par l'intermédiaire du premier terminal de ladite information non prédictible,
- un moyen de vérification (120, 220, 470) de ladite information non prédictible par ledit serveur adapté, si la vérification est positive, à autoriser un accès du premier terminal à une ressource du premier réseau de communication.

8. Dispositif de certification selon l'une quelconque des revendications 6 ou 7, **caractérisé en ce que** le moyen d'identification est adapté à transmettre au serveur, par l'intermédiaire d'un premier réseau de communication, un certificat (600) représentant, chiffré avec une clé publique, l'adresse unique du deuxième terminal.

9. Dispositif de certification selon l'une quelconque des revendications 6 à 8, **caractérisé en ce que** le moyen d'identification est adapté à transmettre un certificat (600) comportant un moyen d'obtention d'une adresse unique d'un terminal sur un réseau de communication (602) et un pointeur (603) identifiant une autre base de données comportant de l'information de signature électronique.

10. Dispositif de certification selon l'une quelconque des revendications 6 à 9, **caractérisé en ce que** le moyen d'identification est adapté à transmettre un certificat (600) comportant un certificat (601) conforme à l'infrastructure à clés publiques PKI.
